(19) Europäisches Patentamt / European Patent Office / Office européen des brevets

(11) EP 3 029 190 A1

(12) **EUROPEAN PATENT APPLICATION**
published in accordance with Art. 153(4) EPC

(43) Date of publication:
**08.06.2016 Bulletin 2016/23**

(21) Application number: **14831150.9**

(22) Date of filing: **26.02.2014**

(51) Int Cl.:
***D04H 1/728*** *(2012.01)*
***D04H 1/4382*** *(2012.01)*
***D04H 1/4374*** *(2012.01)*
***B01D 39/02*** *(2006.01)*

(86) International application number:
**PCT/KR2014/001569**

(87) International publication number:
**WO 2015/016449 (05.02.2015 Gazette 2015/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:
**01.08.2013 KR 20130091638**
**01.08.2013 KR 20130091639**
**01.08.2013 KR 20130091640**
**01.08.2013 KR 20130091641**
**01.08.2013 KR 20130091643**
**01.08.2013 KR 20130091644**
**01.08.2013 KR 20130091645**
**01.08.2013 KR 20130091647**
**01.08.2013 KR 20130091648**
**01.08.2013 KR 20130091649**
**01.08.2013 KR 20130091650**
**01.08.2013 KR 20130091651**
**01.08.2013 KR 20130091652**
**01.08.2013 KR 20130091653**
**01.08.2013 KR 20130091660**
**01.08.2013 KR 20130091661**

(71) Applicant: **Finetex Ene, Inc.**
**Seoul 137-819 (KR)**

(72) Inventor: **PARK, Jong-Chul**
**Seoul 140-774 (KR)**

(74) Representative: **v. Bezold & Partner Patentanwälte - PartG mbB**
**Akademiestraße 7**
**80799 München (DE)**

(54) **MULTI-LAYERED NANOFIBER FILTER HAVING IMPROVED HEAT RESISTANCE, AND METHOD FOR MANUFACTURING SAME**

(57) A multi-layered nanofiber filter for improved heat-resisting property and its manufacturing method are provided that realizes high efficient and heat-resistant polymer nanofiber filter having fine pore and low pressure loss by electrospinning polymer on a substrate and consecutively laminating forming polymer nanofiber.

FIG.1

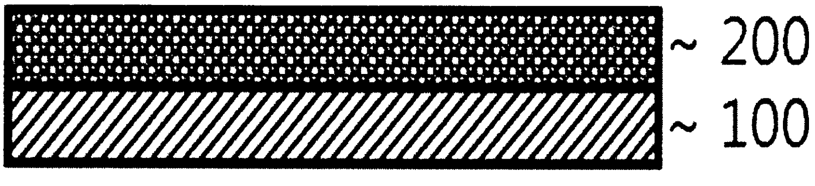




Printed by Jouve, 75001 PARIS (FR)

## Description

### Technical Field

The present invention relates to a multi-layered nanofiber having increased heat resistance and its manufacturing method. More particularly, the present invention relates to the multi-layered nanofiber filter having increased heat resistance by electrospinning polymer on substrate and polymer nanofibers are consecutively laminating and its manufacturing method.

### Background Art

Generally, a filter is a filtering medium which filters out foreign matter in fluid, and comprises a liquid filter and an air filter. An air filter is used for prevention of defective high-tech products along high-tech industry development. Installation in Clean room which completely eliminates biologically harmful things such as dust in air, particles, bio particles such as virus and mold, bacteria, etc. is more prevalent day by day. Clean room is applied in various fields such as production of semiconductor, assembly of computing device, tape manufacture, seal printing, hospital, medicine production, food processing plant, and food and agriculture field.

The air filter forms porous layer with fine porous structure on the surface of a filter medium, performs function of stop penetrating dust into the medium, and filters. However, particles with larger particle size form Filter Cake on the surface of the filter medium. Also, fine particles go through the first surface layer, gradually accumulate in the filter medium, and block pore of the filter. Eventually, particles blocking pore of filter and fine particles increase pressure loss of a filter, decline sustainability of a filter, and with conventional filter medium there is difficulty in filtering fine pollutant particles having 1 micron or less nanosize.

Meanwhile, conventional air filter provides static electricity to fiber-assembly comprising a filter medium, and measures efficiency according to the principle collecting by electrostatic force. However, European Air Filter Test Standard, EN779, revised to eliminate efficiency of filter by static electricity effect in 2012 and revealed that conventional filter actual efficiency decreases 20% or more.

In addition, as glass-fiber which is used as conventional heat-resistant filter material causes bad-influence to the environment, Europe and the United States are in the state of restricting glass-fiber use for environmental safety.

Meanwhile, gas turbine which is a kind of rotary-internal combustion engine generally used in thermal power plant intakes purified air from outside, compresses it, injects compressed air with fuel to combustion burner, mixes them, combusts mixed air and fuel, obtains high temperature and high pressure combustion gas, injects the high temperature and high pressure combustion gas to vane of turbine, and attains rotatory power.

Since the gas turbine comprises very precise component, periodic planned preventive maintenance is held, and wherein the air filter is used for pretreatment to purify air in the atmosphere which inflows to a compressor.

Here, the air filter adopts air for combustion intake to gas turbine, removes foreign substance in atmosphere such as dust, purifies thoroughly, and provides the air to the gas turbine. Filter currently used in gas turbine has problems such as it is vulnerable to high temperature and foreign matter is not well eliminated.

Moreover, most micro-fiber conventionally produced uses spinning methods such as melt-spinning, dry-spinning, and wet-spinning. In short, polymer solution is forced to spin through fine holes with mechanical force. However, nonwoven fabric manufactured using such method has diameter of approximately 5 ~ 500$\mu$m range, and has difficulty in producing nanofiber 1$\mu$m or less. Therefore, filter comprising fiber with large diameter could filter large polluted particles, but filtering fine polluted particles of nanosize is virtually impossible.

In order to solve the problems stated above, various methods which apply to filter by producing nanosize fiber have been developed. When applying nanofiber to filter, comparing to conventional filter medium having large diameter, specific-surface area is very large, flexibility of surface functionality is good, pore size is nano-level, and harmful fine particles and gas are effectively eliminated.

However, filter using nanofiber has problems such as increasing production cost, difficulty in adjusting various conditions for production. Also, as there is difficulty in mass-production, filter using nanofiber could not be produced and distributed in relatively low unit cost. Moreover, filters currently used in gas turbine, furnace, etc. are required heat-resisting property.

In addition, filters used in gas turbine, furnace, etc. conventionally used glass fiber to satisfy heat-resisting property. However, in Europe and the United States, use of glass fiber is restricted for environmental safety, and other heat-resistant material filter are required, and comparing to conventional filter, filter having more enhanced heat-resisting property is required.

Also, since conventional technology of spinning nano non-woven fabric is limited to small scale production line concentrating on laboratory, there is no concept such as dividing spinning-section into unit or block, and in this case only nano non-woven fabric with even fiber thickness spun. When using the nano non-woven fabric as filter, there are

problems such as limitations in permeability and sustainability.

Meanwhile, substrate of conventional filter is cellulose or synthesis-fiber, and developed in method of coating nanofiber on substrate. However, in the case of coating nanofiber on substrate, nanofiber and substrate separation was founded. In order to prevent this, separate adhesives or additives were input, in this case, adjusting spinning condition is difficult and when realization of filter using nanofiber, production cost is increased, difficulty in adjusting various conditions for production. Also, as there is difficulty in mass-production, filter using nanofiber could not be produced and distributed in relatively low unit cost.

Moreover, as conventional technology of spinning nanofiber is limited to small scale production line concentrating on laboratory, there is no concept such as dividing spinning-section into unit or block, and in this case spinning only nanofiber with even thickness. When using the nanofiber as filter, there are problems such as limits in permeability and sustainability.

## Disclosure

## Technical Problem

The present invention is contrived to solve the problems, the purpose is to provide multi-layered nanofiber filter and manufacturing method thereof. The electrospinning polymer on substrate, polymer nanofibers of present invention are consecutively laminating formed, having fine pore and low pressure loss, high efficient and heat-resistant polymer nanofiber filter, and having enhanced heat-resisting property.

## Technical Solution

In order to achieve the objects stated above, the present invention is multi-layered nanofiber filter for enhanced heat-resisting property, comprising: a substrate; the first heat-resistant polymer nanofiber non-woven fabric laminating formed by electrospinning on the substrate; and the second heat-resistant polymer nanofiber non-woven laminating formed by electrospinning on the first heat-resistant polymer nanofiber non-woven fabric.

Moreover, the present invention is manufacturing method of multi-layered nanofiber filter for enhanced heat-resisting property, comprising: a step of after dissolving the first heat-resistant polymer in organic solvent, the first spinning solution is provided to nozzle connected to a front-end block, and dissolving the second heat-resistant polymer in organic solvent and the second spinning solution is provided to nozzle connected to a rear-end block; a step of electrospinning the first spinning solution on cellulose substrate from nozzle connected to the front-end block, and the first polymer nanofiber non-woven fabric laminating formed; and a step of consecutively electrospinning the second spinning solution on the first polymer nanofiber non-woven fabric from nozzle connected to the rear-end block, and the second polymer nanofiber non-woven fabric laminating formed.

Also, the present invention is manufacturing method of multi-layered nanofiber filter for enhanced heat-resisting property, further comprising: a step of after dissolving polyacrylonitrile in organic solvent and providing polyacrylonitirle solution to a front-end block nozzle, dissolving meta-aramid in organic solvent and providing meta-aramid solution to a middle bock of nozzle, and after dissolving polyamic acid in organic solution and providing polyamic acid solution to a rear-end block of nozzle; a step of electrospinning polyacrylonitrile solution on cellulose substrate from the front-end block of nozzle and laminating formed polyacrylonitrile nanofiber non-woven fabric; a step of electrospinning meta-aramid solution on the polyacrylonitirle nanofiber non-woven fabric from the middle block of nozzle and laminating formed meta-aramid nanofiber non-woven fabric; a step of consecutively electrospinning polyamic acid solution on the meta-aramid nanofiber non-woven fabric from the rear-end block of nozzle and laminating formed polyamic acid nanofiber non-woven fabric; and a step of heat-treatment of the laminated polyamic acid nanofiber non-woven fabric and imidization of polyamic acid nanofiber non-woven fabric.

Moreover, the present invention is manufacturing method of multi-layered nanofiber filter for enhanced heat-resisting property, further comprising: a step of dissolving heat-resistant polymer in organic solution and producing spinning solution; and electrospinning the spinning solution on a substrate and laminating formed heat-resistant polymer nanofiber non-woven fabric.

## Advantageous Effects

The multi-layered nanofiber filter according to the present invention has excellent heat-resisting property, simultaneously having fine pore and having low pressure drop and high efficiency. Also, the present invention can realize a new form of high efficient nanofiber filter without causing increase of pressure, and as it has low pressure loss, the filter has excellent durability.

Moreover, the manufacturing method of the multi-layered nanofiber filter according to the present invention

uses electrospinning method, thereby having an advantage of efficient manufacturing process as well as having competitive-price.

## Brief Description of the Drawings

FIG. 1 schematically illustrates a view of a nanofiber filter for improved heat-resisting property according to an exemplary embodiment of the present invention.

FIG. 2 schematically illustrates a view of a nanofiber filter for improved heat-resisting property according to another exemplary embodiment of the present invention.

FIG. 3 schematically shows a view of a nanofiber filter for improved heat-resisting property according to the other exemplary embodiment of the present invention.

FIG. 4 schematically depicts a process view of an electrospinning apparatus according to an exemplary embodiment of the present invention.

FIG. 5 schematically depicts a process view of an electrospinning apparatus according to another exemplary embodiment of the present invention.

FIG. 6 schematically illustrates a process view of an electrospinning apparatus block according to an exemplary embodiment of the present invention.

FIG. 7 schematically illustrates a process view of another electrospinning apparatus block according to another exemplary embodiment of the present invention.

FIG. 8 schematically illustrates a view of an electrospinning apparatus thickness measuring device according to an exemplary embodiment of the present invention.

FIG. 9 schematically depicts a view of an electrospinning apparatus nozzle block and nozzle according to an exemplary embodiment of the present invention.

## Description of Reference Numbers of Drawings

1, 1a, 1b: voltage generator,

2: nozzle,

3: nozzle block,

4: collector,

6: auxiliary belt,

7: roller for auxiliary belt,

8: case,

9: thickness measuring device,

10: electrospinning apparatus,

11: supply roller,

12: winding roller,

19: laminating device,

20, 20a, 20b: block,

30: main control device,

41: overflow solution storing tank,

43: pipe,

44: spinning solution storing tank,

45: spinning solution circulation pipe,

100: substrate,

200: polymer nanofiber non-woven fabric,

300: polymer nanofiber non-woven fabric, ceramic coating film, thick nanofiber non-woven fabric,

400: thin nanofiber non-woven fabric.

## Detailed Description of the Preferred Embodiments

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

The present invention describes an electrospinning apparatus manufacturing filter by electrospinning spinning solution on substrate reference to drawings.

FIG. 1 schematically illustrates a view of a nanofiber filter for improved heat-resisting property according to an exemplary embodiment of the present invention. FIG. 2 schematically illustrates a view of a nanofiber filter for improved heat-resisting property according to another exemplary embodiment of the present invention. FIG. 3 schematically shows a view of a nanofiber filter for improved heat-resisting property according to the other exemplary embodiment of the present invention.

Moreover, FIG. 4 schematically depicts a process view of an electrospinning apparatus according to an exemplary embodiment of the present invention. FIG. 5 schematically depicts a process view of an electrospinning apparatus according to another exemplary embodiment of the present invention. FIG. 6 schematically illustrates a process view of an electrospinning apparatus block according to an exemplary embodiment of the present invention. FIG. 7 schematically illustrates a process view of another electrospinning apparatus block according to another exemplary embodiment of the present invention.

In addition, FIG. 8 schematically illustrates a view of an electrospinning apparatus thickness measuring device according to an exemplary embodiment of the present invention. FIG. 9 schematically depicts a view of an electrospinning apparatus nozzle block and nozzle according to an exemplary embodiment of the present invention.

As illustrated in the drawing, the electrospinning apparatus(10) according to the present invention comprises a spinning solution main tank(not shown) filling spinning solution inside, a metering pump(not shown) for quantatively supplying polymer spinning solution filled in the spinning solution main tank, a nozzle block(3) arranged a plurality of nozzle(2) which discharge polymer spinning solution in the spinning solution main tank and comprising in pin form, a collector(4) collecting spun and jetted polymer spinning solution which is located and installed over the nozzle block with a predetermined distance apart, and a block(20) holding inside a voltage generator (1a, 1b) which generates voltage to the collector(4), and a case(8) comprising a conductor or a non-conductor in the block(20).

The present invention comprises one spinning solution main tank (not shown), or in the case of comprising two or more spinning solution, two or more spinning solution main tank are provided, or the inside of one spinning solution main tank can be divided in to two or more space, and each of the divided space can be filled and supplied two or more polymer spinning solution.

Moreover, according to an embodiment of the present invention, it uses two spinning solution main tank(not

shown). However, the present invention can use one spinning solution main tank, and after dividing the inner space into two, each of the divided space can be each filled and used two different kinds of spinning solution. Moreover, in the case of 3 or more kinds of polymer are used, the inside of a spinning solution main tank can be divided into 3 or more space, and 3 or more spinning solution main tank can be provided and each polymer solution can be provided.

Meanwhile, according to another embodiment of the present invention, it comprises using three spinning solution main tank(not shown), and provided three kinds of polymer solution in each spinning solution main tank. However, it comprises one spinning solution main tank, the inner space is divided in three sections, and each of the section can each be filled and used three kinds of polymer solution.

Here, according to the present invention, the electrospinning apparatus(10) uses a bottom-up electrospinning apparatus which jets spinning solution in upward direction.

Meanwhile, in an embodiment of the present invention, for an electrospinning apparatus, a bottom-up electrospinning apparatus which jets spinning solution in upward direction is used, or a top-down electrospinning apparatus which jets spinning solution in downward direction can be used, or a hybrid electrospinning apparatus which uses both a bottom-up electrospinning apparatus and a top-down electrospinning apparatus can be used, and it does not be limited thereto.

Moreover, the present invention uses two spinning solution main tank(not shown). However, it can use one spinning solution main tank, after dividing the inner space into two sections, and each filling and using two different kinds of spinning solution in each section. Also, in the case of polymer being three or more kinds, the inside of spinning solution main tank can be divided in three or more space, and three or more spinning solution main tank can be provided and each polymer solution can be provided.

According to the structure as stated above, the electrospinning apparatus(10) consecutively quantatively provides spinning solution filled in the block(20) of spinning solution main tank in a plurality of nozzle(2) provided high voltage through a metering pump, polymer spinning solution provided in the nozzle(2) spin and line-focused on a collector(4) flowing high voltage through the nozzle(2), forms nanofiber non-woven fabric(not shown), and laminating formed nanofiber non-woven fabric and producing filter.

In addition, in the front-end of the electrospinning apparatus(10) jets polymer spinning solution from a block(20), and has a supply roller(11) providing an elongated sheet(not shown) laminating formed nanofiber, and in the rear-end, a winding roller(12) winding an elongated sheet laminating formed nanofiber is provided.

The elongated sheet is provided for nanofiber sagging prevention and carrying. The present invention uses a filter substrate(5) as an elongated sheet, and on the filter substrate(5) polymer spinning solution laminating jets and nanofiber is formed.

In an embodiment of the present invention, the filter substrate(5) is used as an elongated sheet, or release paper or non-woven fabric can be used, and it does not limited thereto.

The elongated sheet is provided for preventing nanofiber from sagging and carrying. The elongated sheet is provided from the supply roller(11) provided in the front-end of the electrospinning apparatus(10) and is wound up on the winding roller(12) provided in the rear-end.

Meanwhile, each of the block(20a, 20b) of the electrospinning apparatus(10) is installed in the elongated sheet's progress direction(a) based on a collector(4). Moreover, between the collector(4) and the elongated sheet, an auxiliary belt(6) is each provided. Through each of the auxiliary belt(6), the elongated sheet collecting in each collector(4) and laminating formed nanofiber is carried in parallel direction. In other words, the auxiliary belt(6) synchronizes and rotates in feed speed of the elongated sheet, and having a roller for auxiliary belt(7) for driving the auxiliary belt(6). The roller for auxiliary belt(7) is an automatic roller with very small frictional force and the number is two or more. Since the auxiliary belt(6) is provided between the collector(4) and the elongated sheet, the elongated sheet does not attract to the collector applied high voltage and is smoothly carried.

According to the structure as stated above, in a spinning solution main tank of the block (20) of the electrospinning apparatus, filled spinning solution jets on an elongated sheet located on a collector through a nozzle(2), and on the elongated sheet, jetted spinning solution is collected and laminating formed nanofiber non-woven fabric. In addition, according to rotation of the roller for auxiliary belt provided in both sides of the collector(4), an auxiliary belt(6) is driven and an elongated sheet is carried, and located in a block(20b) in the rear-end of the electrospinning apparatus(10), and the process is repeatedly performed.

Meanwhile, a nozzle block(3) as illustrated in FIG. 5, comprising a plurality of nozzle(2) arranged spinning solution in upward direction from an outlet, a pipe(43) comprising the nozzle(2) in series, a spinning solution storing tank(44), and a spinning solution circulation pipe(45).

To begin with, the spinning solution storing tank(44) which supplies and stores spinning solution and is connected to the spinning solution main tank supplies spinning solution on a nozzle(2) through a spinning solution circulation pipe(45) by the metering pump(not shown) and progress in spinning. Here, a pipe(43) comprising a plurality of nozzle(2) in series is provided the same spinning solution from the spinning solution storing tank(44). Also, a plurality of the spinning solution main tank is provided, and each is provided with different kind of polymer, and can supply different kind of

spinning solution to each pipe(43) and spin.

When spinning from an outlet of the plurality of nozzle(2), solution which could not be spun and overflowed is carried to an overflow solution storing tank(41). The overflow solution storing tank(41) is connected to the spinning solution main tank so overflowed solution can be reused in spinning.

Meanwhile, the main control device(30) of the present invention adjusts spinning condition in the overall process of spinning, controls the amount of spinning solution provided in a nozzle block(3), adjusts voltage of a voltage generator (1a, 1b) in each block(20a, 20b), and according to nanofiber non-woven fabric and an elongated sheet thickness measured by a thickness measuring device(9), feed speed of each block(20a, 20b) is controlled.

The thickness measuring device(9) of the present invention is located in the block(20) front-end and rear-end, and nanofiber non-woven fabric is installed in opposite putting laminating formed elongated sheet in between. The thickness measuring device(9) is connected to the main control device(30) which adjusts spinning condition of the electrospinning apparatus(10), based on the value of nanofiber non-woven fabric and an elongated sheet thickness by the thickness measuring device(9), the main control device(30) controls feed speed of each block(20a, 20b). For example, in terms of electorspinning, thickness of noanofiber discharged in the block(20a) located in the front-end is measured thickness deviation, feed speed of the block(20b) located in the rear-end is decreased, and evenly adjusts thickness of nanofiber non-woven fiber. In addition, the main control device(30) increases discharging amount of the nozzle block(3), adjusts voltage intensity of the voltage generator (1a, 1b), increases discharging amount of nanofiber per unit area, and can adjusts uniformed thickness of nanofiber non-woven fabric.

The thickness measuring device(9), according to an ultrasonic measuring method, comprises a thickness measuring portion measuring a pair of ultrasonic wave, longitudinal wave, and transverse wave which measures the distance between laminating formed nanofiber non-woven fabric and an elongated sheet. Also, based on the measured distance according to the pair of ultrasonic wave, thickness of the nanofiber non-woven fabric and the elongated sheet is calculated, and this is described in FIG. 4. Specifically, nanofiber projects ultrasonic wave, longitudinal wave, and transverse wave altogether on laminated elongated sheet, each ultrasonic signal of longitudinal wave and transverse wave measures reciprocating motion time between the nanofiber and the elongated sheet, in other words after measuring each propagation time of longitudinal wave and transverse wave, the measured propagation time of longitudinal wave and transverse wave and from a fixed formula using temperature constant of propagation velocity of longitudinal wave and transverse wave and temperature constant of propagation velocity from reference temperature of elongated sheet laminated nanofiber, calculating thickness of the subject.

The electrospinning apparatus(10) of the present invention does not change feed speed from initial value in the case of deviation of nanofiber non-woven fabric thickness is less than a certain value, and can control to change feed speed from initial value in the case of the deviation is more than a certain value so control of feed speed according to a feed speed control device can be simplified. Also, not only it can control feed speed but also discharging amount of the nozzle block(3) and voltage intensity can be adjusted. In the case of deviation of thickness is less than a certain value, the nozzle block(3) discharging amount and voltage intensity are not changed from initial value, and in the case of the deviation is more than a certain value, discharging amount of the nozzle block(3) and voltage intensity can be controlled not to change from initial value so the nozzle block(3) discharging amount and voltage intensity control can be simplified.

Meanwhile, the block(20) of the electrospinning apparatus(10) comprises the front-end block(20a) located in the front-end and the rear-end block(20b) located in the rear-end according to spinning location. In an embodiment of the present invention, the number of block is limited to 2, but it can comprise 2 or more or 1.

Moreover, hybrid nanofiber comprising 2 or more kinds of polymer spinning solution can be manufactured.

In addition, by differing voltage intensity provided in each of the block(20), nanofiber with different fiber thickness can consecutively laminating formed, and by supplying different polymer spinning solution to each nozzle(2) located in a nozzle block(3) in one block(20), two or more polymer electrospun and laminating formed hybrid nanofiber can be formed.

Also, in the electrospinning apparatus(10) when electrospinning the same kind of polymer from each block(20), fiber thickness of discharged nanofiber non-woven fabric from the block(20) located in the front-end and fiber thickness of discharged nanofiber non-woven fabric from the block(20) located in the rear-end can be different and it can spin. For example, in order to have difference in fiber thickness, voltage intensity provided to each of the block(20) can be different, or even though adjusting space between the nozzle(2) and the collector(4), nanofiber non-woven fabric with different thickness can be formed, in the case of spinning solution is the same and supply voltage is the same, according to the principle that nearer spinning distance, thicker fiber diameter and further spinning distance, thinner fiber diameter, nanofiber non-woven fabric with different fiber diameter can be formed. Also, spinning solution concentration can be adjusted, or by adjusting feed speed of an elongated sheet, there can be difference in fiber thickness.

Moreover, in the present invention from each of the block(20a, 20b) the same polymer spinning solution spin, or each of the block(20a, 20b) can spin different kind of polymer spinning solution, or in any one block two or more different polymer spinning solution can be spun. In the case of in each block(20a, 20b) at least two or more kinds of

different spinning solution each provided and spun, different kind of polymer nanofiber non-woven fabric can consecutively laminating formed.

Meanwhile, in the rear-end of the electrospinning apparatus(10) of the present invention, a laminating device(19) is installed. The laminating device(19) is provided heat and pressure, through this an elongated sheet and nanofiber non-woven fabric are adhered, winded in a winding roller(12) and produces filter.

By operating electrospinning through the electrospinning method, as illustrated in FIG. 1, produced nanofiber shows different laminating of non-woven fabric according to air inflow direction.

Meanwhile, the electrospinning apparatus(10) enlarges collecting area and can uniform nanofiber collecting density. Also, it effectively prevents Droplet Phenomenon, enhances nanofiber quality, enhances effect of fiber formation by electric force, and can mass-produce nanofiber. Also, from the block(20) having a nozzle(2) comprising a plurality of pin, in terms of electrospinning, material and electrospinning condition can be differently adjusted so non-woven fabric and filament width and thickness can be freely modified and adjusted.

In addition, in the case of the electrospinning polymer, even though it is different according to polymer matter, it is the most preferable to electrospinning in environmental condition of temperature permitted limit 30 to 40°C and humidity 40 to 70%.

In the present invention, nanofiber diameter is preferably from 30 to 1000nm, and more preferably from 50 to 500nm.

A description will now be given to polymer used in the present invention.

Heat-resistant polymer resin comprises polymer with the melting point 180°C or more so even though temperature continuously rises, it doesn't get damaged by melting point. For example, heat-resistant polymer resin comprising heat-resistant polymer extremely fine fiber layer is resin with the melting point 180°C or more or resin with no melting point such as polyamide, polyimide, polyamide-imide, poly(meta-phenylene isophthalamide), polysulfone, polyether ketone, polyether imide, aromatic polyesters such as polyethylene terephthalate, polytrimethylene terephthalate, polyethylene naphthalate, polyphosphazene kinds such as polytetrafluoroethylene, polydiphenoxyphosphazene, polybis[2-(2-methoxyethoxy) phosphazene], polyurethane copolymer including polyurethane and polyether urethane, and cellulose acetate, cellulose acetate butyrate, cellulose acetate propionate. Resin with no melting point refers to resin which doesn't melt though temperature is 180°C or more and burn out. Also, heat-resistant polymer resin used in the present invention is preferably dissolve in organic solvent for extremely fine fiberize such as electrospinning.

First, polyimide is polymer containing imide group in repeating unit, and has feature of not changing property in wide temperature range from 273°C below zero to 400°C above zero, and mechanical strength and heat-resisting property are very excellent. However, since most polyimide has insolubility property and it is very difficult to process with conventional process so in polyamic acid(PAA) form which is the precursor is generally processed. Therefore, polyimide is manufactured by polymerizing polyamic acid and going through imidization process.

Generally, polyimide is manufactured according to step two reaction. The first step is a step synthesizing polyamic acid, polyamic acid adds and polymerizes dianhydride in reacting solution, in this case, in order to increase polymerization, adjustment in reaction temperature, solvent's water content, and monomer purity is needed. Solvent used in this step is mainly organic polar solvent such as dimethylacetamide (DMAc), dimethylformamide(DMF), and N-methyl-2-pyrrolidone(NMP). For the diamine at least one can be used among 4-4'-oxydianiline(ODA), para-phenylene diamine(p-PDA), and o-phenylene diamine(o-PDA). Also, for the anhydride at least one selected from the group including pyromellitic dianhydride(PMDA), benzophenonetetracarboxylic dianhydiride(BTDA), 4-4'-oxydiphthalic anhydride(ODPA), biphenyl-tetracarboxylic acid dianhydride(BPDA), and bis(3,4-dicarboxyphenyl) dimethylsilane dianhydride(SIDA).

Moreover, weight average molecular weight(Mw) of polyamic acid produced through the method is preferably 10,000 to 500,000. If molecular weight of polyamic acid is less than 10,000, sufficient property for achieving non-woven fabric can't be obtained, and if it is more than 500,000, handling solution is not easy and performance declines.

The second step is a step of dehydration and cyclization reaction producing polyimide from polyamic acid, four methods stated below are representative.

First, reprecipitation method injects polyamic acid solution in excessive amount of poor solvent, and obtains polyamic acid in solid state. For reprecipitation solvent mainly water is used, and toluene or ether are used as cosolvent.

Secondly, chemical imidization method uses acetic anhydride/pyridine as dehydration catalyst, and performs chemically imidization reaction. This method is useful in polyimide film manufacture.

Thirdly, thermal imidization method heats polyamic acid solution in 150 to 350°C, and performs thermally imidization method. The most simple process or degree of crystallization is high, and when using amine solvent, amine exchange reaction occurs so there is drawback such as polymer degradation.

Lastly, isocyanate method uses diisocyanate as monomer instead of diamine, and heating monomer mixture in temperature 120°C or more, $CO_2$ gas occurs and polyimide is manufactured.

[Scheme1]

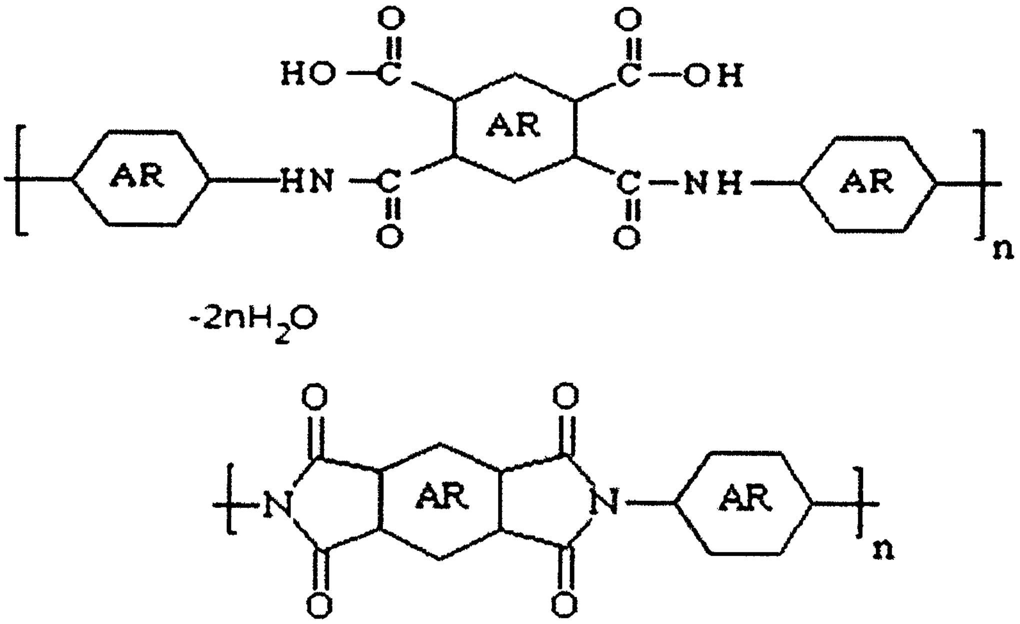


Also, polyacrylonitrile(PAN) means polymer of acrylonitrile(CH2=CHCN).

[Scheme 2]

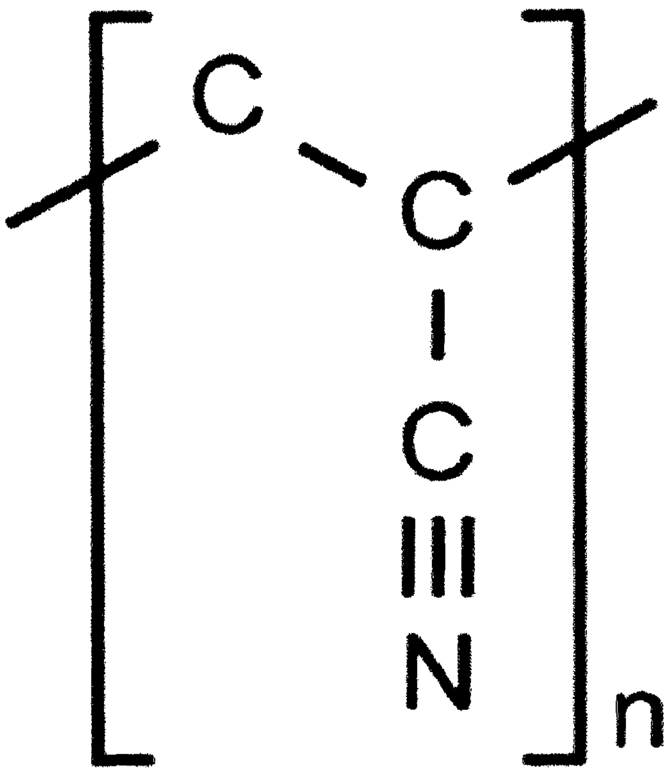

Here, polyacrylonitrile resin is copolymer made from mainly mixture of acrylonitrile and monomer. Mostly used monomer is butadiene styrene vinylidene chloride or other vinyl compound, etc. Acrylic fiber comprises at least 85% of acrylic nitrile, and modacrylic including 35 to 85% of acrylonitrile. If other monomer is included, fiber has feature of

increasing chemical affinity regarding dye. Specifically, with respect to acrylonitrile-based copolymer and spinning solution manufacture, in the case of producing using acrylonitrile-based copolymer, in the process of producing micro fiber in electrospinning method, less nozzle contamination, excellent electrospinning, increasing solubility of solvent, and better mechanical properties. Also, polyacrylonitrile softening point is 300°C or more, and heat-resisting property is excellent.

Moreover, polyacrylonitrile polymerization degree is 1,000 to 1,000,000, and preferably 2,000 to 1,000,000.

Also, polyacrylonitrile is preferably used in the realm satisfying acrylonitrile monomer, hydrophobic monomer, and hydrophilic monomer usage amount. When polymerization of polymer, acrylonitrile monomer weight% is hydrophilic monomer weight% and hydrophobic monomer weight% ratio is 3:4, in the case of the value subtracted from the total monomer is less than 60, viscosity is too low for electrospinning, wherein even though inputting cross-linker, it causes contamination of nozzle and difficult to form stable JET when electrospinning. Also, in the case of the value if 90 or more, spinning viscosity is so high that it is difficult to spinning, wherein even though inputting additives which can low viscosity, diameter of micro fiber is thicken, productivity of electrospinning is so low that it can not achieve the object of the present invention.

In addition, in acrylic polymer, more comonomer is inputted, the amount of cross-linker should be more input in order to achieve stability in electrospinning and prevent nanofiber mechanical property degradation.

The hydrophobic monomer is preferably to use any one or more selected from ethylene-based compound such as methacrylate, ethyl acrylate, methyl methacrylate, ethyl methacrylate, butyl methacrylate, vinyl acetate, vinyl pyrrolidone, vinylidene chloride, and vinyl chloride, and derivatives thereof.

The hydrophilic monomer is preferably to use any one or more selected from among ethylene-based compound and polyfunctional acid such as acrylic acid, allyl alcohol, meta-allyl alcohol, hydroxyethyl acrylate, hydroxyethyl methacrylate, hydroxypropyl acrylate, butanediol monoacrylate, dimethylaminoethyl acrylate, butenetricarboxylic acid, vinyl sulfonic acid, allyl sulfonic acid, methallyl sulfonic acid, and parastyrene sulfonic acid, and derivatives thereof.

Initiator used for producing the acrylonitrile-based polymer is azo compound or sulfate compound, but generally it is preferable to use radical initiator used in oxidation-reduction reaction.

Meanwhile, the heat-resistant polymer used in the present invention is preferable to use polyether sulfone.

Generally, polyethersulfone(PES) is amber transparent non-crystalline resin having repeating unit, generally produced according to condensation polymerization of dichlorodiphenyl sulfone.

[Scheme 3]

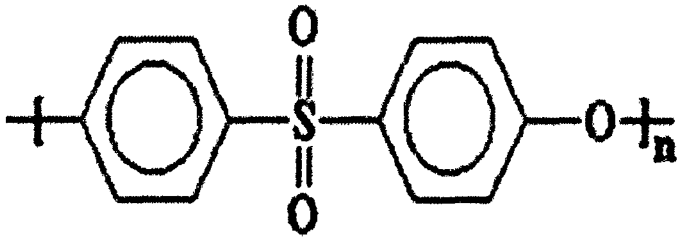

Polyether sulfone is super heat-resistant engineering plastic developed by the British ICI Corp, among thermoplastic it is polymer having very excellent heat-resisting property. Since polyether sulfone is non-crystalline, there is less property degradation by temperature rise, and because of less temperature dependency of flexural modulus, in minus 100°C to 200°C, it almost doesn’t change. Distortion temperature under load is 200 to 220°C, and glass transition temperature is 225°C. Also, creep resistance within 180°C is the most excellent among thermoplastic resin, and have properties to withstand hot water of 150°C to 160°C or stream.

Due to the properties, polyether sulfone is used in optical disc, magnetic disk, in electrical and electronic field, in hydrothermal field, in automobile field, and heat-resisting for paint.

Also, solvent usable with the polyether sulfone is acetone, tetrahydrofuran, methylene chloride, chloroform, N-Dimethylformamide(DMF), N-Dimethylacetamide(DMAc), N-methyl pyrrolidone(NMP), cyclohexane, water, or their mixture, and it does not limited thereto.

Moreover, the description examines polyamide used in the present invention.

Polyamide is polymer connected to amide bond(-CONH-), and can be obtained by condensation polymerization of diamine and diacid. Polyamide differs characteristic according to amide bond in molecular structure, and according to amidogen ration, property is modified. For example, if ratio of amidogen in molecular increases, specific gravity, the melting point, absorbency, rigidity, etc. also increases.

In addition, because of polyamide excellent properties in corrosion resistance, wear resistance, chemical resistance, and insulating properties, it is applied in various fields such as for clothing, tire cord, carpet, rope, computer

ribbon, parachute, plastic, adhesive, etc.

In general polyamide is classified aromatic polyamide and aliphatic polyamide, representative aliphatic polyamide is nylon. Nylon is originally the U.S. DuPont Corp brand name, but currently it is used as nonproprietary name.

Nylon is hygroscopic polymer, and reacts sensitive to temperature. Representative nylon is nylon 6, nylon 66, and nylon 46, etc.

First, nylon 6 has excellent properties in heat-resisting property, formability, and chemical resistance. In order to produce it, ring-opening polymerization of ε-Caprolactam is used. Nylon 6 is named because the carbon number of caprolactam is six.

[Scheme 4]

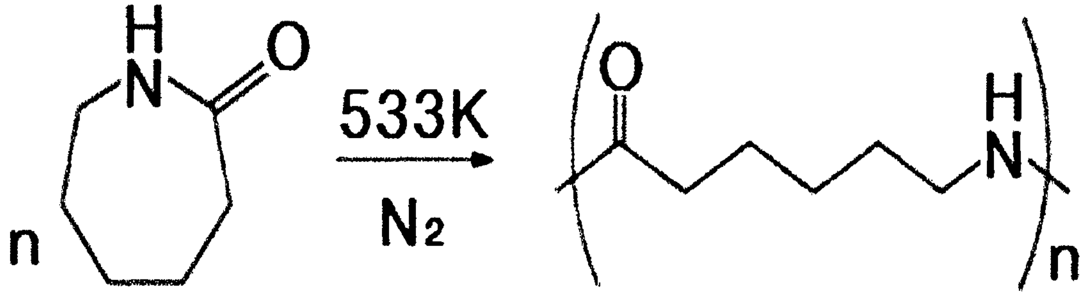


Meanwhile, nylon 66 and nylon 6 have similar properties in general, but comparing to nylon 6, nylon 66 heat-resisting property is very excellent, and it is polymer excellent in self-extinguishability and wear resistance. Nylon 66 is produced by dehydration condensation polymerization of hexamethylenediamine adipic acid.

[Scheme 5]

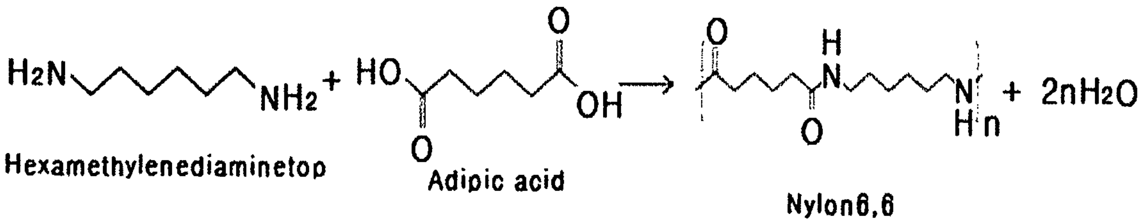
Hexamethylenediaminetop
Adipic acid
Nylon6,6

Also, nylon 46 has excellent heat-resisting property, mechanical properties, and shock resistance, and processing temperature is high. Nylon 46 is manufactured by polycondensation of tetramethylenediamine and adipic acid. The raw material diaminobutane(DAB) is produced from reaction of acrylonitrile and hydrogen cyanide. The first step in polymerization process is making salt from diaminobutane and adipic acid, under proper pressure, after polymerization reaction, change to prepolymer, and the prepolymer solid under existence of nitrogen and water vapor, processed in approximately 250°C, and produced in a solid state being polymerization.

Especially, nylon 6 has excellent properties in regular ordered arrangement methylene group and amide group and having high amide concentration. Nylon 46 melting point is approximately 295°C, and it is higher than other nylon types. Because of the properties, it receives attention as resin having excellent heat-resisting property.

The following examines meta-aramid used in the present invention.

Meta-aramid is the first super heat-resistant aramid fiber, within a short time in 350°C, and when using consecutively, it can be used in 210°C, and if it is exposed in temperature more than this, it melts with other fibers or has properties not combusted but carbonized. Most of all, unlike other products done flame resistance or flame retarding, during carbonization, poisonous gas or harmful substance is not emitted so it also has excellent properties as environmental-friendly fiber. Moreover, meta-aramid has very strong molecular structure of molecule comprising fiber, its original strength is strong and in spinning step molecule is easily oriented in fiber axis direction, enhances crystallinity, and increases fiber strength.

The meta-aramid portion is 1.3 to 1.4, and preferable to have weight average molecular weight of 300,000 to 1,000,000. The most preferable weight average molecular weight is 3,000 to 500,000. Also, it includes meta-oriented synthetic aromatic polyamide. Polymer should have fiber-forming molecular weight, and primary can include aromatic polyamide homopolymer, copolymer and mixture thereof, wherein at least 85% of amide(-CONH-)bond directly attached

two aromatic rings. The ring can be unsubstituted or substituted. Polymer having two rings or when radical is meta-oriented with respect to each other according to molecular chain, it becomes meta-aramid. Preferably, copolymer has 10% or less other diamine which substituted primary diamine used in forming polymer, or having 10% or less other diacid chloride which substituted primary diacid chloride used in forming polymer. Preferable meta-aramid is poly(meta-phenylene isophthalamide)(MPD-I) and its copolymer. One such meta-aramid fiber is Nomex(registered trademark) aramid fiber available from E. I. du Pont de Nemours and Company in Wilmington, Delaware, the United States. However, meta-aramid fiber is available in various styles such as Tejinconex(registered trademark) available from Teijin Ltd. Of Tokyo, Japan; New Star(registered trademark) meta-aramid available from Yantai Spandex Co. Ltd of Shandong, China; and Chinfunex(registered trademark) aramid 1313 available from Guangdong Charming Chemical Co. Ltd. of Xinhui, Guangdong, China.

The organic solvent can be used to select any one or more among propylene carbonate, butylene carbonate, 1,4-butyrolactone, diethyl carbonate, dimethyl carbonate, 1,2-dimethoxyethane, 1,3-dimethyl-2-imidazolidinone, dimethyl sulfoxide, ethylene carbonate, ethylmethyl carbonate, N,N-dimethylformamide, N,N-dimethylacetamide, N-methyl-2-pyrrolidone, polyethylene sulfolane, tetraethylene glycol dimethyl ether, acetone, alcohol, or their mixture, and more preferably it is preferred to use dimethylformamide(DMF) or dimethylacetamide(DMAc).

The following description examines inorganic polymer used in the present invention.

Inorganic polymer refers to polymer including inorganic element in polymer main chain or side chain. The inorganic element narrowly means a variety of metal(Ordinary Metals filling s and p orbit such as aluminum and magnesium, Transition Metals filling d orbit such as titanium, zirconium and tungsten, Inner Transition Metals filling f orbit such as lanthanoide-actinoids), and broadly comprising forming framework with non-metallic inorganic elements such as Si, Ge, P, and B elements.

This inorganic polymer can be divided into the following four types.

First, in the case of inorganic component including side chain of inorganic polymer, nature of inorganic polymer is almost maintained, in the case of nature of inorganic component included in side chain is shown, second, in the case of inorganic element is together introduced with carbon in polymer main chain framework or introduced alone, third in the case of organic-inorganic hybrid polymer designed to play a role as precursor for producing ceramic, and forth, in the case of ionic compound having network structure comprising purely inorganic component or lattice structure.

Inorganic polymer started to get attention as in the mid 1980s Yajima of Nippon Carbon used polycarbosilane(PCS) and synthesized SiC fiber(product name: NICALON) which came on the market. Until now it is not used much, but it is a product expected to be used not only in future aerospace and nuclear power field but also in heat-resisting property field of general industrial field. Application method of inorganic polymer as a complex is polymer impregnation and pyrolysis(PIP), this method mixes organic compound such as PCS and silicon carbide powder and after making slurry, the slurry permeates into silicon carbide fiber preform and pyrolyzes, and obtaining silicon carbide matrix. Recently, as development in fiber with excellent heat-resisting property is getting attention, if PIP method is improved by developing new inorganic compound having excellent feature, by increasing pyrolysis temperature, silicon carbide matrix with excellent crystalline and stoichiometric ratio can be produced.

Meanwhile, among various application field of inorganic polymer, ceramic precursor application caused enormous development in high-tech industries field. Especially, Silicon carbide(SiC), silicon nitride($Si_3N_4$), and ceramic are thermally and chemically stable in high temperature, intensity is strong so the use is prevalent in various fields such as defense weapon field like the aerospace, ship, automobile, missile, etc., electrical and electronic, steel industry, nuclear reactor business, machine for shelf building, and sport product manufacture, and it has various industrial use such as for special use, ceramic is manufactured in film or fiber form. Moreover, silicon polymer is economical because raw material is low price and polymerization yield is high, and in molecule Si and C or N ratio can be adjusted variously, and because of high fusibility and solubility, forming processing is possible and in order to increase ceramic remaining yield, crosslinking can be made by various chemical reaction. According to pyrolysis condition, it can be easily selected to silicon carbide, silicon nitride, etc., by pyrolyzing by mixing with metal, cermet also can be produced.

Inorganic polymer used in electrospinning inorganic polymer produces spinning solution which dissolved inorganic polymer in acetone solvent. In this case, number average molecular weight of inorganic polymer is preferably in realm of 5,000 to 100,000.

The inorganic polymer is siloxane or siloxane polymer alone or siloxane group or polymer comprising siloxan copolymer and coupler selected among monomethacrulate, vinyl, hydride, distearate, bis(12-hydroxy-stearate), methoxy, ethoxylated, propoxylated, diglycidyl ether, mono glycidyl ether, mono hydroxy, bis(hydroxyalkyl), chlorine, bis(3-aminopropyl), and bis((amino ethyl-amino propyl)dimethoxy silyl)ether.

The following description explains substrate used in the present invention.

For the substrate, it is preferable to use one kind selected among cellulose substrate, meta-aramid substrate, bicomponent substrate.

First, the cellulose substrate has excellent dimennal stability in high temperature and has feature of high heat-resisting property. Fine cellulose fiber has high crystalline and high modulas of elasticity in regard of forming fine porous

structure, and essentially in high temperature dimensional stability is very excellent. Because of such feature, cellulose substrate is used in consumer products such as high performance filter, functional paper, sheet for cooking, and air cleaning sheet, and in technical fields such as semiconductor device, board for wiring board, substrate of low linear coefficient of expansion material, and separator for electric condenser such as capacitor. Also, the cellulose substrate is a natural fiber, and it is an environmental friendly material which can be decomposed after disposal of filter so it reduces additional environment pollution caused by conventional non-biodegradable filter.

Also, meta-aramid substrate has very excellent heat-resisting property because of meta-aramid feature comprising the substrate. Meta-aramid is benzene ring combined with amidogen in meta location, the strength is similar to nylon, but it has advantages such as thermal stability is very excellent, it is lighter compared to other heat-resistant material, and it is possible to absorb. Meta-aramid can be used properly as filter substrate because as it has more operating condition of high temperature, filter stability can be achieved.

Meanwhile, the following description explains the bicomponent substrate. Fiber forming polymer of bicomponent substrate comprising general bicomponent is polyester including polyethylene terephthalate, polyethylene naphthalate, polypropylene terephthalate, polybutylene terephthalate, and the polypropylene terephthalate is such as polytrimethylene terephthalate and polybutylene terephthalate such as polytetramethylene terephthalate.

The bicomponent substrate of the present invention is most preferably polyethylene terephthalate which combined two components with different melting point.

The polyethylene terephthalate bicomponent substrate is core-sheath bicomponent structure comprising polyethylene terephthalate core and low melting point polyethylene terephthalate, in each fiber, sheath is approximately 10 to 90 weight%, and core is approximately 90 to 10 weight%. The sheath works as a thermal bonding agent forming outer surface of binder fiber, having a melting point of approximately 80 to 100°C. The core has a melting point of approximately 160 to 250°C. The following description explains heat adhesive composite fiber in detail providing example of sheath-core type which is a proper realization.

Sheath-core type heat adhesive composite fiber is in sheath portion a conventional melting point analysis instrument and comprising non-crystalline polyester copolymer which doesn't show a melting point, and core component is preferably heat adhesive composite fiber relatively using high melting point component.

Polyester copolymer included in the sheath portion is copolymerization polyester having 50 to 70mol% of polyethylene terephthalate unit. Also, 30 to 50mol% is copolymerization acid component and is preferably isophtallic acid, but besides that the usual dicarboxylic acid is all possible.

Moreover, high melting point component used as the core component suitable is polymer with a melting point of 160 or more, and available examples are polyethylene terephthalate, polybutylene terephthalate, polyamide, polyethylene terephthalate copolymer, and polypropylene, etc.

After laminating nanofiber non-woven fabric on the bicomponent substrate(100) and heat-fusing, the sheath portion of the bicomponent substrate(100) is melt, plays a role as adhesive between the substrate and the nanofiber non-woven fabric, and there is an advantage of not needing a separate adhesive.

The following description explains manufacturing method of polyimide nanofiber filter for improved heat-resisting property according to an embodiment of the present invention.

First, in the present inveniton, for spinning solution polyamic acid is used, and for an elongated sheet a cellulose substrate(100) can be used.

Moreover, polyamic acid solution which dissolved the polyamic acid in organic solvent is provided to a spinning solution main tank of the electrospinning apparatus(10). Polyamic acid solution provided in the spinning solution main tank is consecutively and quantitatively provided to a plurality of nozzle(2) of a nozzle block(3) provided high vlotage through a metering pump. Polyamic acid solution provided to each of the nozzle(2) is jetted on the cellulose substrate(100) located on a collector(4) flowing high voltage through the nozzle(2), and forms polyamic acid nanfiber non-woven fabric.

In the present inveniton, polyamic acid solution is used as the spinning solution, but it does not limited thereto. Meanwhile, in a front-end block(20a) of the electrospinning apparatus(10), the cellulose substrate(100) laminated polyamic acid nanofiber is carried from the front-end block(20a) to a rear-end block(20b) by a supply roller(11) operated by a motor(not shown) driving and rotation of an auxiliary belt(6) driving by the supply roller(11) rotation, the process is repeated, and forms polyamic acid nanofiber non-woven fabric on the cellulose substrate(100).

In an embodiment of the present invention, instead of an elongated sheet, the cellulose substrate(100) was used, but it is not limited thereto.

Meanwhile, a voltage generator(1a) which provides voltage to the front-end block(20a) provides low spinning voltage, and forms polyamic acid nanofiber non-woven fabric with fiber diameter of 250 to 500nm on the cellulose substrate(100), and a rear-end voltage generator(1b) which provides voltage to the rear-end block provides high spinning voltage, and laminating forms polyamic acid nanofiber non-woven fabric with fiber diameter of 50 to 250nm on the polyamic acid nanofiber non-woven fabric with fiber diameter of 250 to 500nm.

Here, spinning voltage provided by each of the voltage generator(1a, 1b) is 1kV or more, preferably is 20kV or more, and voltage provided by the front-end voltage generator(1a) is lower than voltage provided by the rear-end voltage

generator(1b).

In the present invention, voltage of the front-end block(20a) of the electrospinning apparatus(10) is provided low, laminating forms polyamic acid nanofiber non-woven fabric with fiber diameter of 250 to 500nm on substrate, and voltage of the rear-end block(20b) is provided high, laminating forms polyamic acid nanofiber non-woven fabric with fiber diameter of 50 to 250nm on the polyamic acid nanofiber non-woven fabric with fiber diameter of 250 to 500nm, and forms polyamic acid nanofiber filter. However, by differing voltage intensity, polyamic acid nanofiber non-woven fabric with fiber diameter of 50 to 250nm spun in the front-end block(20a), and polyamic acid nanofiber non-woven fabric with fiber diameter of 250 to 500nm can spin in the rear-end block(20b).

In addition, comprising 3 or more blocks of the electrospinning apparatus(10), differing voltage in each block, and it is possible to produce nanofiber filter laminating forming 3 layer of nanofiber non-woven fabric with different fiber thickness on the bicomponent substrate.

Moreover, by differing voltage intensity provided to each block(20), it is possible to consecutively laminating forming nanofiber non-woven fabric with different fiber thickness, and in one block(20), each nozzle(2) located in a nozzle block(3) supplies different polymer spinning solution, and it is possible to form hybrid nanofiber non-woven fabric electrospun two or more kind polymer together and laminating formed.

Also, by adjusting space between the nozzle(2) and a collector(4), it can form nanofiber non-woven fabric with different thickness, in the case of spinning solution is the same and supply voltage is the same, according to the principle of the nearer spinning distance is, the thicker fiber diameter is, and the farther spinning distance is, the thinner fiber diameter is, it is possible to form nanofiber non-woven fabric with different fiber diameter.

Above this, by comprising two or more kinds of spinning solution polymer, it is possible to produce hybrid nanofiber non-woven fabric.

Therefore, on the cellulose substrate(100), polyamic acid nanofiber non-woven fabric with fiber diameter of 250 to 500nm is laminating forming, and on the polyamic acid nanofiber non-woven fabric with fiber diameter of 250 to 500nm, polyamic acid nanofiber non-woven fabric with fiber diameter of 50 to 250nm is laminating formed, and polyamic acid nanofiber filter is produced.

Polyamic acid nanofiber filter laminating formed according to the process stated above goes through a laminating device(19), becomes thermal imidization, and produces as polyimide nanofiber filter. In the laminating device(19), imidization is performed in 150 to 350°C, and dehydrates polyamic acid nanofiber filter, and produces as polyimide nanofiber filter.

In other words, as the polyamic acid nanofiber filter becomes imidization, on the cellulose substrate(100), a polyimide nanofiber non-woven fabric(200) with fiber diameter of 250 to 500nm is laminating formed, on the polyimide nanofiber non-woven fabric(200) with fiber diameter of 250 to 500nm, a polyimide nanofiber non-woven fabric(300) with fiber diameter of 50 to 250nm laminating formed, and finally polyimide nanofiber filter is produced.

The following description explains manufacture method of multi-layered nanofiber filter for improved heat-resisting property according to another embodiment of the present invention.

First, according to the present invention, meta-aramid solution and polyamic acid solution are used, and as an elongated sheet, a cellulose substrate(100) is used.

In an embodiment of the present invention, instead of an elongated sheet, the cellulose substrate(100) was used, but it is not limited thereto.

Meanwhile, meta-aramid solution which dissolved meta-aramid in organic solvent is provided to a spinning solution main tank connected to a front-end block(20a) located in front-end of the electrospinning apparatus(10), and polyamic acid solution which dissolved polyamic acid in organic solvent is provided to a spinning solution main tank connected to a rear-end block(20b) located in the rear-end. Spinning solution provided to each of the spinning solution main tank is consecutively and quantitatively provided to a plurality of nozzle(2) located in a nozzle block(3) provided high voltage through a metering pump. Each spinning solution provided from each of the nozzle(2) electrospun and line-focused on the cellulose substrate(100) located on the collector(4) flowing high voltage through the nozzle(2).

In the present invention, for the spinning solution meta-aramid solution is used, but it is not limited thereto.

In this case, in order to foster fiber forming by electric force, in the nozzle block(3) and a collector(4) flows voltage of 1kV or more generated from a voltage generator(1), and more preferably 20kV or more voltage. Also, for the collector(4), it is more advantageous to use endless belt in terms of productivity. The collector is preferable to do left and right reciprocating motion in predetermined distance to uniform nanofiber density.

Here, in the front-end block(20a) of the electrospinning apparatus(10), the cellulose substrate(100) which electrospun meta-aramid solution and laminated meta-aramid nanofiber carries from the front-end block(20a) to the rear-end block(20b) by a supply roller(11) operated by a motor(not shown) driving and by rotation of an auxiliary belt(6) operated by rotation of the supply roller(11), the process is repeated, and on the cellulose substrate(100), meta-aramid and polyamic acid nanofiber non-woven fabric is formed.

In other words, in the front-end block(20a), on the cellulose substrate(100), meta-aramid nanofiber non-woven fabric(200) which electrospun meta-aramid and laminating formed is formed, and in the rear-end block(20b), on the

meta-aramid nanofiber non-woven fabric polyamic acid nanofiber non-woven fabric which electrospun polyamic acid solution and laminating formed is formed.

For the spinning solution, polyamic acid solution is used, but it is not limited thereto.

Moreover, polyamic acid nanofiber non-woven fabric laminating formed by the process stated above goes through laminating device(19), becomes thermal imidization, and produces as polyimide nanofiber non-woven fabric. In the laminating device(19), imidization is performed in 150 to 350°C, dehydrates polyamic acid nanofiber filter, and produces as polyimide nanofiber filter.

Therefore, in other words, the polyamic acid nanofiber non-woven fabric becomes imidization, on the cellulose substrate, meta-aramid nanofiber non-woven fabric(200) laminating formed, on the meta-aramid nanofiber non-woven fabric, polyimide nanofiber non-woven fabric(300) laminating formed, and finally nanofiber filter of the present invention is produced.

The following description explains manufacture method of an inorganic polymer nanofiber filter for improved heat-resisting property according to the other embodiment of the present invention.

First, spinning solution used in the present invention is inorganic polymer, and for an elongated, a substrate(100) is used.

Moreover, inorganic polymer solution which dissolved the inorganic polymer in solvent is provided to a spinning solution main tank of the electrospinning apparatus(10), and inorganic polymer solution provided to the spinning solution main tank is consecutively and quantitatively provided in a plurality of nozzle(2) in a nozzle block(3) provided high voltage and connected to each block(20a, 20b) through a metering pump. Heat-resistant polymer solution provided from each of the nozzle (2) spun and line-focused on the substrate(100) located on the collector(4) flowing high voltage through the nozzle(2), and forms an inorganic polymer nanofiber non-woven fabric.

Here, the following description explains the substrate(100). The substrate(100) can be used preferably cellulose substrate or meta-aramid substrate.

Also, meta-aramid substrate has very excellent heat-resisting property because of meta-aramid features comprising the substrate. Meta-aramid is benzene ring and amidogen combined in meta location. Its strength is similar to the usual nylon, but meta-aramid has advantages such as very excellent thermal stability, lighter than other heat-resistant material, having absorbability. Since operating condition in high temperature can achieve filter stability, it can be properly used as filter substrate.

In an embodiment of the present invention, instead of an elongated sheet, the substrate (100) is used, but it is not limited thereto.

Meanwhile, a front-end voltage generator(1a) providing voltage to the front-end block(20a) provided low spinning voltage, forms an inorganic polymer nanofiber non-woven fabric with fiber diameter of 250 to 500nm on a substrate(100), a rear-end voltage generator(1b) providing voltage to a rear-end block(20b) provided high spinning voltage, and laminating forming an inorganic polymer nanofiber non-woven fabric with fiber diameter of 50 to 250nm on the inorganic polymer nanofiber non-woven fabric with fiber diameter of 250 to 500nm. Here, spinning voltage provided to each of the voltage generator (1a, 1b) is 1kV or more, preferably 20kV or more, and voltage provided by the front-end voltage generator(1a) is lower than voltage provided by the rear-end voltage generator(1b).

According to the present invention, voltage of the front-end block(20a) of the electrospinning apparatus(10) is provided low, laminating forming inorganic polymer nanofiber non-woven fabric with fiber diameter of 250 to 500nm on substrate, voltage of the rear-end block(20b) is provided high, laminating forming inorganic polymer nanofiber non-woven fabric with fiber diameter of 50 to 250nm on the inorganic polymer nanofiber non-woven fabric with fiber diameter of 250 to 500nm, and forms inorganic polymer nanofiber filter. However, by differing voltage intensity, inorganic polymer nanofiber non-woven fabric with fiber diameter of 50 to 250nm spun in the front-end block(20a), and inorganic polymer nanofiber non-woven fabric with fiber diameter of 250 to 500nm can be spun in the rear-end block(20b).

Also, comprising 3 or more blocks of the electrospinning apparatus(10), differing voltage of each block(20a, 20b), and it can produce nanofiber filter laminating forming 3 layers of nanofiber non-woven fabric with different fiber thickness on substrate(100).

Moreover, by differing voltage intensity provided to each block(20), nanofiber non-woven fabric with different fiber thickness can be laminating formed, and in one block(20), by providing different polymer spinning solution to each nozzle(2) located in a nozzle block(3), two or more kinds of polymer are together electrospun and laminating formed, and hybrid nanofiber non-woven fabric can be formed.

In addition, in order to differentiate fiber thickness, the method of differing voltage intensity provided to each block(20a, 20b) is used, but by adjusting space between the nozzle(2) and the collector(4) can form nanofiber non-woven fabric with different thickness. In the case of spinning solution is the same and supply voltage is the same, according to the principle of the nearer spinning distance is, the thicker fiber diameter is, and the further spinning distance is, the thinner fiber diameter is, nanofiber non-woven fabric with different fiber diameter can be formed. Also, by adjusting spinning solution concentration, or by adjusting an elongated sheet feed speed, it can differentiate fiber thickness.

Above this, comprising 2 or more kinds of polymer of spinning solution, hybrid nanofiber non-woven fabric can

be produced. Therefore, on the substrate(100), inorganic polymer nanofiber non-woven fabric(200) with fiber diameter of 250 to 500nm laminating formed, an inorganic polymer nanofiber filter laminating formed inorganic polymer nanofiber non-woven fabric(300) with fiber diameter of 50 to 250nm on the inorganic polymer nanofiber non-woven fabric(200) with fiber diameter of 250 to 500nm is produced.

The following description explains manufacturing method of filter medium by using polyether sulfone and polyimide which are heat-resistant polymer resin.

Here, as heat-resistant polymer resin, polyether sulfone and polyimide are used, but it does not limited thereto.

First, the first spinning solution is produced by dissolving polyether sulfone in organic solvent. The first spinning solution is provided to a spinning solution main tank of the electrospinning apparatus(10), and the first spinning solution is consecutively and quantitatively provided to a plurality of nozzle(2) of a nozzle block(3) provided high voltage through a metering pump.

Polyether sulfone solution provided to each of the nozzle(2) spun and line-focused on a collector(4) flowing high voltage through a nozzle(2), sprayed on a meta-aramid substrate(5), and forms polyether sulfone nanofiber. Here, in front-end block(20a) of the electrospinning apparatus(10), a substrate laminated polyether sulfone nanofiber is carried from a front-end block(20a) to a rear-end block(20b) by a supply roller(11) operated by driving of a motor(not shown) and rotation of an auxiliary belt(6) driving by the supply roller(11) rotation.

The second spinning solution provided from the rear-end block(20b) to a main tank injected polyimide precursor solution is consecutively and quantitatively provided to a plurality of nozzle(2) of a nozzle block(3) provided high voltage through a metering pump.

In this case, the front-end block(20a) is called the first supply device, and the rear-end block(20b) is called the second supply device.

More specifically, in the first main tank which stores spinning solution of electrospinning of the present invention stores polyether sulfone spinning solution, and in the second main tank, spinning solution of polyimide precursor resin is stored. The first and second supply device is generally planned to have sealed cylindrical form, and plays a role of providing spinning solution injected consecutively from a spinning solution main tank according to section. A nozzle block is divided into 2 sections, in each section is provided with the first and second supply device, and the first supply device uses polyether sulfone solution, and the second supply device uses polyimide precursor resin solution.

A filter laminating polyether sulfone nanofiber and polyimide nanofiber on produced meta-aramid substrate can extend filter sustainability when using as an air filter of a gas turbine which inflowing high temperature air in air flow direction as using polymer resin with good heat-resisting property.

The length of section divided in the nozzle block can be adjusted according to each layer thickness comprising filter medium.

Also, mechanical properties such as polymer membrane thickness, fiber diameter, and fiber form can be adjusted through controlling electrospinning process conditions such as applied voltage intensity, polymer solution type, viscosity of polymer solution, discharge flow rate.

Desirable electrospinning process condition when spinning solution carried to spinning solution supply pipe is discharged to a collector through a multiple tubular nozzle and forms fiber, nanofiber electrospun from the multiple tubular nozzle widely spreads by sprayed air from a nozzle for air supply, collected on a collector, collecting area becomes wider and integration density is uniform. Excess spinning solution which can't be fiberize in a multiple tubular nozzle is collected from a nozzle for removing overflow, goes through a temporal storage plate of overflow liquid, and again moved to a spinning solution supply plate.

In the case of manufacturing nanofiber, recommended air speed in a nozzle for air supply is 0.05 to 50m/sec, and more preferably 1 to 30m/sec. In the case of air speed is less than 0.05m/sec, distribution of nanofiber collected in a collector is low so collecting area is not largely enhanced, and in the case of air speed is more than 50m/sec, air speed is so fast that the area line-focused in a collector is decreased, and more seriously not nanofiber but as thick skein form attached to a collector, and nanofiber formation prominently declines.

In addition, spinning solution excessively provided to uppermost part of nozzle block is carried by force to spinning solution main tank by spinning solution discharging device.

In this case, in order to foster fiber forming by electric force, an electric conductor plate installed in lower end of nozzle block and a collector flow voltage generated in voltage generator of 1kV or more, and more preferably 20kV or more. For the collector, it is advantageous in terms of productivity to use endless belt. The collector is preferable to do right and left reciprocating motion in predetermined space in order to uniform nanofiber density.

Nanofiber formed on the collector goes through a web supporting roller, wound in a winding roller, and nanofiber manufacturing process is completed.

The manufacturing device widens collecting area, and it can uniform nanofiber integration density, and by effectively preventing droplet phenomenon, quality of nanofiber can be enhanced, fiber forming effect by electric force increases, and can mass-produce nanofiber. Moreover, nozzles comprising a plurality of pin are arranged in block form, and nanofiber's and filament's width and thickness can be modified and adjusted freely.

Also, in the case of spinning heat-resistant polymer, even though it is different according to polymer material, it is the most preferable to spinning in environmental conditions of temperature permitted limit of 30 to 40°C, and humidity of 40 to 70%.

In the present invention, diameter of nanofiber forming multi-layered filter medium is desirable to be 30 to 1,000nm, and more desirable 50 to 500nm.

Multi-layered air porosity is desirable to be 40 to 80%, and the smaller fiber diameter is, the smaller pore size is and pore distribution is also smaller. Also, the smaller fiber diameter is, the larger fiber specific surface area is so efficiency of filtering fine particles increases.

The following description explains manufacturing method of filter medium using inorganic polymer and one among heat-resistant polymer resin such as polyacrylonitrile, polyether sulfone, polyimide, polyamide, meta-aramid, and polyvinylidene fluoride.

First, the first spinning solution is produced by dissolving heat-resistant polymer in organic solvent. The first spinning solution is provided to a spinning solution main tank of the electrospinning apparatus(10), and the first spinning solution is consecutively and quantitatively provided to a plurality of nozzle(2) of a nozzle block(3) provided high voltage through a metering pump.

Heat-resistant polymer solution provided to each of the nozzle(2) spun and line-focused on a collector(4) flowing high voltage through a nozzle(2), sprayed on a meta-aramid substrate, and forms meta-aramid nanofiber. Here, in a front-end block(20a) of the electrospinning apparatus(10), a substrate laminated heat-resistant polymer nanofiber is carried from a front-end block(20a) to a rear-end block(20b) by a supply roller(11) operated by a motor(not shown) driving and rotation of an auxiliary belt(6) driving by the supply roller(11) rotation.

The second spinning solution provided from the rear-end block(20b) to a main tank injected inorganic polymer solution is consecutively and quantitatively provided to a plurality of nozzle(2) of a nozzle block(3) provided high voltage through a metering pump.

In this case, the front-end block(20a) is called the first supply device, and the second-end block(20b) is called the second supply device.

More specifically, in the first main tank which stores spinning solution of electrospinning of the present invention stores polymer spinning solution, and in the second main tank, inorganic spinning solution is stored. The first and second supply device is generally planned to have sealed cylindrical form, and plays a role of providing spinning solution injected consecutively from a spinning solution main tank according to section. A nozzle block is divided into 2 sections, in each section is provided with the first and second supply device, and the first supply device uses polymer solution, and the second supply device uses inorganic polymer solution.

A filter laminating inorganic polymer nanofiber and selected on among heat-resistant polymer nanofiber such as polyacrylonitrile, polyether sulfone, polyimide, polyamide, meta-aramid, polyvinylidenefluoride on produced meta-aramid or cellulose substrate when using as air filter of gas turbine inflowing high temperature air in air flow direction, as using polymer resin with good heat-resisting property, it can extend filter sustainability.

The length of section divided in the nozzle block can be adjusted according to each layer thickness comprising filter medium.

Also, mechanical properties such as polymer membrane thickness, fiber diameter, and fiber form can be adjusted through controlling electrospinning process conditions such as applied voltage intensity, polymer solution type, viscosity of polymer solution, discharge flow rate.

Desirable electrospinning process condition when spinning solution carried to spinning solution supply pipe is discharged to a collector through a multiple tubular nozzle and forms fiber, nanofiber electrospun from the multiple tubular nozzle widely spreads by sprayed air from a nozzle for air supply, collected on a collector, collecting area becomes wider and integration density is uniform. Excess spinning solution which can't be fiberize in a multiple tubular nozzle is collected from a nozzle for removing overflow, goes through a temporal storage plate of overflow liquid, and again moved to a spinning solution supply plate.

In the case of manufacturing nanofiber, recommended air speed in a nozzle for air supply is 0.05 to 50m/sec, and more preferably 1 to 30m/sec. In the case of air speed is less than 0.05m/sec, distribution of nanofiber collected in a collector is low so collecting area is not largely enhanced, and in the case of air speed is more than 50m/sec, air speed is so fast that the area line-focused in a collector is decreased, and more seriously not nanofiber but as thick skein form attached to a collector, and nanofiber formation prominently declines.

In addition, spinning solution excessively provided to uppermost part of nozzle block is carried by force to spinning solution main tank by spinning solution discharging device.

In this case, in order to foster fiber forming by electric force, an electric conductor plate installed in lower end of nozzle block and a collector flow voltage generated in voltage generator of 1kV or more, and more preferably 20kV or more. For the collector, it is advantageous in terms of productivity to use endless belt. The collector is desirable to do right and left reciprocating motion in predetermined space in order to uniform nanofiber density.

Nanofiber formed on the collector goes through a web supporting roller, wound in a winding roller, and nanofiber

manufacturing process is completed.

The manufacturing device widens collecting area, and it can uniform nanofiber integration density, and by effectively preventing droplet phenomenon, quality of nanofiber can be enhanced, fiber forming effect by electric force increases, and can mass-produce nanofiber. Moreover, nozzles comprising a plurality of pin are arranged in block form, and nanofiber's and filament's width and thickness can be modified and adjusted freely.

Also, in the case of spinning heat-resistant polymer, even though it is different according to polymer material, it is the most desirable to spinning in environmental conditions of temperature permitted limit of 30 to 40°C, and humidity of 40 to 70%.

In the present invention, diameter of nanofiber forming multi-layered filter medium is desirable to be 30 to 1,000nm, and more desirable 50 to 500nm.

Multi-layered air porosity is desirable to be 40 to 80%, and the smaller fiber diameter is, the smaller pore size is and pore distribution is also smaller. Also, the smaller fiber diameter is, the larger fiber specific surface area is so efficiency of filtering fine particles increases.

The following description explains manufacturing method of filter comprising nylon nanofiber and bicomponent substrate according to the present invention.

First, in the present invention, nylon is applied as spinning solution, and a bicomponent substrate(100) is applied as an elongated sheet.

Nylon solution which dissolved the nylon in organic solvent is provided to a spinning solution main tank of the electrospinning apparatus(10). Also, nylon solution provided to the spinning solution main tank is consecutively and quantitatively provided to a plurality of nozzle(2) of a nozzle block(3) provided high voltage in each block(20a, 20b) through a metering pump. Nylon solution provided from each of the nozzle(2) is electrospun and line-focused on the bicomponent substrate(100) of an elongated sheet located on a collector(4) flowing high voltage through a nozzle(2), and forms nylon nanofiber non-woven fabric.

Provided though a nozzle(2) of a nozzle block(3) in the block(20), using nylon solution which dissolved nylon applied as spinning solution in organic solvent, and desirably using nylon 6, nylon 46 or nylon 66 solution.

In an embodiment of the present invention uses nylon solution as spinning solution, but it does not limited thereto. Meanwhile, in the present invention uses a bottom-up electrospinning apparatus which the electrospinning apparatus(10) jets spinning solution in upward direction.

In an embodiment of the present invention uses a bottom-up electrospinning apparatus which jets spinning solution in upward direction, or top-down electrospinning apparatus which jets spinning solution in downward direction can be used, and also a hybrid electrospinning apparatus which uses a bottom-up and top-down electrospinning apparatus together can be used.

In an embodiment of the present invention uses the bicomponent substrate(100) instead of an elongated sheet, but it is not limited thereto.

Here, nylon nanofiber in a front-end block(20a) of the electrospinning apparatus(10) is carried from a front-end block(20a) to a rear-end block(20b) by a supply roller(11) operated by driving of a motor(not shown) and rotation of an auxiliary belt(6) driving by rotation of the supply roller(11), the process is repeated, and on the bicomponent substrate(100) nylon nanofiber non-woven fabric is formed.

In this case, a front-end voltage generator(1a) which provides voltage to the front-end block(20a) provides low spinning voltage, and forms nylon nanofiber non-woven fabric(200) with fiber diameter of 250 to 500nm on the bicomponent substrate(100), and a rear-end voltage generator(1b) which provides voltage to the rear-end block provides high spinning voltage, and laminating forms nylon nanofiber non-woven fabric(300) with fiber diameter of 50 to 250nm on the nylon non-woven fabric(200) with fiber diameter of 250 to 500nm.

Here, spinning voltage provided by each of the voltage generator(1a, 1b) to a nozzle and a collector is 1kV or more, preferably is 20kV or more, and voltage provided by the front-end voltage generator(1a) is lower than voltage provided by the rear-end voltage generator(1b).

In the present invention, voltage of the front-end block(20a) of the electrospinning apparatus(10) is provided low, laminating forming nylon non-woven fabric(200) with fiber diameter of 250 to 500nm on a substrate, and voltage of the rear-end block(20b) is provided high, laminating forming nylon non-woven fabric(300) with fiber diameter of 50 to 250nm on the nylon non-woven fabric(200) with fiber diameter of 250 to 500nm, and forms nanofiber filter. However, by differing voltage intensity, nylon nanofiber non-woven fabric(300) with fiber diameter of 50 to 250nm spun in the front-end block(20a), and nylon nanofiber non-woven fabric(200) with fiber diameter of 250 to 500nm can spin in the rear-end block(20b).

Also, comprising 3 or more blocks of the electrospinning apparatus(10), differing voltage in each block, and it is possible to produce nanofiber filter laminating forming 3 layer of nanofiber non-woven fabric with different fiber thickness on the bicomponent substrate.

Moreover, by differing voltage intensity provided to each block(20), it is possible to consecutively laminating forming nanofiber non-woven fabric with different fiber thickness, and in one block(20), each nozzle(2) located in a nozzle

block(3) supplies different polymer spinning solution, and it is possible to form hybrid nanofiber non-woven fabric electrospun and laminating formed two or more kinds polymer together. Also, by adjusting space between the nozzle(2) and a collector(4), it can form nanofiber non-woven fabric with different thickness, in the case of spinning solution is the same and supply voltage is the same, according to the principle of the nearer spinning distance is, the thicker fiber diameter is, and the farther spinning distance is, the thinner fiber diameter is, it is possible to form nanofiber non-woven fabric with different fiber diameter.

Above this, by comprising two or more kinds of spinning solution polymer, it is possible to produce hybrid nanofiber non-woven fabric.

Therefore, on the bicomponent substrate(100), a nylon nanofiber non-woven fabric(200) with fiber diameter of 250 to 500nm laminating formed, and on the nylon nanofiber non-woven fabric(200) with fiber diameter of 250 to 500nm, nylon nanofiber non-woven fabric(300) with fiber diameter of 50 to 250nm is laminating formed, and finally a filter comprising nylon nanofiber and a bicomponent substrate is formed, going through a laminating device(19) and thermos compression bonding process, a filter comprising nylon nanofiber and a bicomponent substrate(100) is produced.

The following description explains manufacturing method of multi-layered nanofiber filter for improved heat-resisting property according to an embodiment of the present invention.

First, according to the present invention, for spinning solution, polyacrylonitrile solution, meta-aramid solution, and polyamic acid solution are used, and for an elongated sheet, a cellulose substrate(100) is used.

Moreover, polyacrylonitrile solution which dissolved polyacrylonitrile in organic solvent is provided to a spinning solution main tank connected to a front-end block(20a) located in front-end of the electrospinning apparauts(10), meta-aramid solution which dissolved meta-aramid in organic solvent is provided to a spinning solution main tank connected to a middle block(20b) located in middle of the electrospinning apparatus(10), and polyamic acid solution which dissolved polyamic acid in organic solvent is provided to a spinning solution main tank connected to a rear-end block(20c) located in rear-end of the electrospinning apparatus(10).

In addition, spinning solution provided to each of the spinning solution main tank is consecutively and quantitatively provided to a plurality of nozzle(2) located in a nozzle block(3) provided high voltage through a metering pump. Each spinning solution provided from each of the nozzle(2) spun and line-focused on a collector(4) flowing high voltage through a nozzle(2), and sprayed on a cellulose substrate(100).

In an embodiment of the present invention uses a cellulose substrate(100) instead of an elongated sheet, but it is not limited to this.

Meanwhile, in the electrospinning apparatus(10), in order to facilitate fiber formation by electric force, in a nozzle block(3) and a collector(4) flows voltage of 1kV or more generated from a voltage generator(1), and more preferably 20kV or more voltage. Also, for the collector(4), it is more advantageous to use endless belt in terms of productivity. The collector is preferable to do left and right reciprocating motion in predetermined distance to uniform density of nanofiber.

Here, spinning solution spun in a block(20) of the electrospinning apparatus(10) is carried from a front-end block(20a) to a rear-end block(20c) going through a middle block(20b) by a supply roller(11) operated by driving of a motor(not shown) and rotation of an auxiliary belt(6) driving by rotation of the supply roller(11), the process is repeated, and on the cellulose substrate(100) nanofiber non-woven fabric is consecutively laminating formed.

In other words, in the front-end block(20a), on the cellulose substrate(100), polyacrylonitrile solution electrospun and forms laminating formed polyacrylonitrile nanofiber non-woven fabric(200), in middle block(20b), on the polyacrylonitrile nanofiber non-woven fabric(200), meta-aramid solution electrospun and forms laminating formed meta-aramid nanofiber non-woven fabric(300), and in rear-end block(20c), on the meta-aramid nanofiber non-woven fabric(300), polyamic acid solution electrospun and forms laminatinf formed polyamic acid nanofiber non-woven fabric.

Polyacrylonitrile/ meta-aramid/ polyamic acid multi-layered nanofiber filter manufactured as stated above goes through a laminating device(19), through thermal imidization, polyamic acid nanofiber non-woven fabric is modified to polyimide nanofiber non-woven fabric(400), and manufactures multi-layered filter of the present invention. The laminating device(19) performs imidization in 150 to 350°C, dehydrates polyamic acid nanofiber non-woven fabric, and produces polyimide nanofiber non-woven fabric.

Therefore, on a cellulose substrate(100), polyacrylonitrile nanofiber non-woven fabric(200), meta-aramid nanofiber non-woven fabric(300), and polyimide nanofiber non-woven fabric are consecutively laminating formed, and a multi-layered nanofiber filter of the present invention is produced.

The following description explains in detail manufacturing method of filter medium forming nanofiber between substrates by using heat-resistant polymer resin.

First, by dissolving the first heat-resistant polymer and the second heat-resistant polymer in organic solvent and produces the first spinning solution and the second spinning solution. The first spinning solution and the second spinning solution are each provided to spinning solution main tank of the electrospinning apparatus(10), and the first spinning solution and the second spinning solution are consecutively and quantitatively provided to a plurality of nozzle(2) of a nozzle block(3) provided high voltage through a metering pump.

The first heat-resistant polymer solution provided to each of the nozzle (2) spun and line-focused on a collector(4)

flowing high voltage through a nozzle(2), sprayed on a cellulose substrate or a meta-aramid substrate(5), and forms the first heat-resistant polymer nanofiber. Here, in a front-end block(20a) of the electrospinning apparatus(10), a substrate laminating the first heat-resistant polymer nanofiber is carried from a front-end block(20a) to a rear-end block(20b) by a supply roller(11) operated by driving of a motor(not shown) and rotation of an auxiliary belt(6) driving by rotation of the supply roller(11).

The second spinning solution provided from a rear-end block(20b) to a main tank injected the second heat-resistant polymer solution is consecutively and quantitatively provided to a plurality of nozzle(2) of a nozzle block(3) provided high voltage through a metering pump.

More specifically, in the first main tank which stores spinning solution of electrospinning of the present invention stores the first heat-resistant polymer spinning solution, and in the second main tank, the second heat-resistant polymer spinning solution is stored. The first and second supply device is generally planned to have sealed cylindrical form, and plays a role of providing spinning solution injected consecutively from a spinning solution main tank according to section. A nozzle block is divided into 2 sections, in each section is provided with the first and second supply device, and the first supply device uses the first heat-resistant polymer spinning solution, and the second supply device uses the second heat-resistant polymer spinning solution.

In the present invention, provided low voltage of the front-end block(20a) of the electrospinning apparatus(10), laminating forming nanofiber with thick fiber thickness on a substrate, and voltage of the rear-end block(20b) is provided highly, laminating forming nanofiber with thin fiber thickness on the nanofiber with thick fiber thickness, and forms nanofiber filter. However, by differing voltage intensity, nanofiber with thin fiber thickness spun in the front-end block(20a), and nanofiber with thick fiber thickness can be spun in the rear-end block(20b).

The length of section divided in the nozzle block can be adjusted according to the thickness of each layer comprising filter medium.

In addition, a grounded collector is controlled to move in one-way, consecutive process of forming consecutive nanofiber layer is possible, and the present invention through such process simplifies manufacturing method of both sides filter medium, and increases speed of the production.

Also, mechanical properties such as polymer membrane thickness, fiber diameter, and fiber form can be adjusted through controlling electrospinning process conditions such as applied voltage intensity, polymer solution type, viscosity of polymer solution, discharge flow rate.

Nanofiber on the substrate in the laminating device(19) the conventional substrate and substrate of other materials are covered with cover, and forms nanofiber layer between substrates.

Desirable electrospinning process condition when spinning solution carried to spinning solution supply pipe is discharged to a collector through a multiple tubular nozzle and forms fiber, nanofiber electrospun from the multiple tubular nozzle widely spreads by sprayed air from a nozzle for air supply, collected on a collector, collecting area becomes wider and integration density is uniform. Excess spinning solution which can't be fiberize in a multiple tubular nozzle is collected from a nozzle for removing overflow, goes through a temporal storage plate of overflow liquid, and again moved to a spinning solution supply plate.

In the case of manufacturing nanofiber, recommended air speed in a nozzle for air supply is 0.05 to 50m/sec, and more preferably 1 to 30m/sec. In the case of air speed is less than 0.05m/sec, distribution of nanofiber collected in a collector is low so collecting area is not largely enhanced, and in the case of air speed is more than 50m/sec, air speed is so fast that the area line-focused in a collector is decreased, and more seriously not nanofiber but as thick skein form attached to a collector, and nanofiber formation prominently declines.

In addition, spinning solution excessively provided to uppermost part of nozzle block is carried by force to spinning solution main tank by spinning solution discharging device.

In this case, in order to foster fiber forming by electric force, an electric conductor plate installed in lower end of nozzle block and a collector flow voltage generated in voltage generator of 1kV or more, and more preferably 20kV or more. For the collector, it is advantageous in terms of productivity to use endless belt. The collector is preferable to do right and left reciprocating motion in predetermined space in order to uniform nanofiber density.

Nanofiber formed on the collector goes through a web supporting roller, wound in a winding roller, and nanofiber manufacturing process is completed.

The manufacturing device widens collecting area, and it can uniform nanofiber integration density, and by effectively preventing droplet phenomenon, quality of nanofiber can be enhanced, fiber forming effect by electric force increases, and can mass-produce nanofiber. Moreover, nozzles comprising a plurality of pin are arranged in block form, and nanofiber's and filament's width and thickness can be modified and adjusted freely.

Also, in the case of spinning heat-resistant polymer, even though it is different according to polymer material, it is the most preferable to spinning in environmental conditions of temperature permitted limit of 30 to 40°C, and humidity of 40 to 70%.

In the present invention, diameter of nanofiber forming multi-layered filter medium is desirable to be 30 to 1,000nm, and more desirable 50 to 500nm.

The following description explains manufacturing method of polyether sulfone nanofiber for improved heat-resisting property which produced through electrospinning polyether sulfone on a meta-aramid substrate produced using the electrospinning apparatus(10).

First, according to the present invention, polyether sulfone is used as polymer of spinning solution, and a meta-aramid substrate(100) is used as an elongated sheet.

Moreover, polyether sulfone solution which dissolved polyether sulfone in organic solvent is provided to a spinning solution main tank of the electrospinning apparatus(10), and consecutively and quantitatively provided to a nozzle(2) of a nozzle block(3) provided high voltage through a metering pump. Polyether sulfone solution provided from each of the nozzle(2) spun and line-focused on a collector(4) provided high voltage through the nozzle(2), sprayed on the meta-aramid substrate(100), and forms polyether sulfone nanofiber non-woven fabric(200).

In the present invention, for the spinning solution polyether sulfone solution is used.

In an embodiment of the present invention, polyether sulfone solution is used as spinning solution, but it does not limited thereto.

Here, a cellulose substrate laminated polyether sulfone nanofiber in a front-end block(20) of the electrospinning apparatus(10) is carried from a block located in front-end to a block located in rear-end by a supply roller(11) operated by driving of a motor(not shown) and by rotation of an auxiliary belt(6) driving by rotation of the supply roller(11), the process is repeated, and on the meta-aramid substrate(100), polyether sulfone nanofiber nonwoven (200) is formed.

In an embodiment of the present invention, instead of an elongated sheet, the meta-aramid substrate(100) is used, but it does not limited thereto.

Therefore, on the meta-aramid substrate(100), in a block(20) of the electrospinning apparatus(10), electrospinning the polyether sulfone, laminating formed polyether sulfone nanofiber non-woven fabric(200), and a filter of the present invention is produced.

Meanwhile, by differing spinning voltage of a front-end block and a rear-end block of the electrospinning apparatus(10), fiber diameter of nanofiber can be made different. In other words, even though it is the same polyether sulfone nanofiber non-woven fabric, when providing low spinning voltage of the front-end block and providing high spinning voltage of the rear-end block, nanofiber with large fiber diameter and polyether sulfone nanofiber with small fiber diameter can be laminated consecutively on the meta-aramid substrate(100). For example, when provided low voltage of the front-end block, polyether sulfone nanofiber non-woven fabric with thick fiber thickness is formed in the front-end, and when provided high voltage in the rear-end block, polyether sulfone nanofiber non-woven fabric with thin fiber thickness can be formed.

Here, in order to putting difference in fiber thickness of the polyether sulfone nanofiber non-woven fabric(200) and spinning, the method of differentiating voltage intensity provided to each block(20) of the electrospinning apparatus(10) is used, and other methods such as differentiating concentration of spinning solution, or adjusting space between a nozzle(2) and a collector(4), or adjusting feed speed of an elongated sheet is used.

The following description explains manufacturing method of polyimide nanofiber filter for improved heat-resisting property produced by electrospinning polyamic acid on a meta-aramid substrate manufactured by using the electrospinning apparatus(10).

First, in the present invention, polyamic acid is used as polymer of spinning solution, and a meta-aramid substrate is used as an elongated sheet.

Moreover, polyamic acid solution which dissolved polyamic acid in organic solvent is provided to a spinning solution main tank of the electrospinning apparatus(10), and the polyamic acid solution provided to the spinning solution main tank is consecutively and quantitatively provided to a nozzle(2) of a nozzle block(3) provided high voltage through a metering pump. Polyamic acid solution provided from each of the nozzle(2) spun and line-focused on a collector(4) provided high voltage through the nozzle(2), sprayed on the meta-aramid substrate(100), and forms polyamic acid non-woven fabric(200).

In the present invention, for the spinning solution polyamic acid solution is used.

In an embodiment of the present invention, polyamic acid solution is used as spinning solution, but it does not limited thereto.

Here, the meta-aramid substrate(100) of the electrospinning apparatus(10) is carried from a block located in front-end to a block located in rear-end by a supply roller(11) operated by driving of a motor(not shown) and by rotation of an auxiliary belt(6) driving by rotation of the supply roller(11), the process is repeated, and on the meta-aramid substrate(100), polyamic acid nanofiber nonwoven (200) is formed.

In an embodiment of the present invention, instead of an elongated sheet, the meta-aramid substrate(100) is used, but it does not limited thereto.

Therefore, a nanofiber filter laminating formed polyamic acid nanofiber non-woven fabric on the meta-aramid substrate(100) is produced.

Meanwhile, through the electrospinning mentioned as above, by laminating forming polyamic acid nanofiber non-woven fabric on the meta-aramid substrate, forms polyamic acid nanofiber filter.

Polyamic acid nanofiber filter manufactured as mentioned above goes through a laminating device(19), through thermal imidization, and produces polyimide nanofiber filter. The laminating device(19) performs imidization in 150 to 350°C, dehydrates polyamic acid nanofiber non-woven fabric, and produces polyimide nanofiber non-woven fabric(200).

A filter manufacture of the present invention laminating formed polyimide nanofiber on the meta-aramid substrate through the imidization process is completed.

Meanwhile, by differing spinning voltage of a front-end block and a rear-end block of the electrospinning apparatus(10), fiber diameter of nanofiber can be made different. In other words, even though it is the same polyamic acid nanofiber non-woven fabric, when providing low spinning voltage of the front-end block and providing high spinning voltage of the rear-end block, nanofiber with large fiber diameter and polyamic acid nanofiber with small fiber diameter can be laminated consecutively on the meta-aramid substrate(100). For example, when provided low voltage of the front-end block, polyamic acid nanofiber non-woven fabric with thick fiber thickness is formed in the front-end, and when provided high voltage in the rear-end block, polyamic acid nanofiber non-woven fabric with thin fiber thickness can be formed. After electrospinning each of the polyamic acid nanofiber non-woven fabric, and going through imidization, the polyamic acid nanofiber non-woven fabric with thick fiber thickness becomes thick polyimide nanofiber non-woven fabric(300), and on the polyimide nanofiber non-woven fabric(300) with thick fiber thickness, can laminating form polyimide nanofiber non-woven fabric(400) with thin fiber thickness.

In an embodiment of the present invention, by putting a difference in voltage in a front-end block and a rear-end block, a filter consecutively laminating formed polyamic acid nanofiber non-woven fabric with different fiber thickness can be produced.

Here, in order to put a difference in fiber thickness of the polyamic acid nanofiber non-woven fabric(200), the method of differentiating voltage intensity provided to each block(20) of the electrospinning apparatus(10) is used, and other methods such as differentiating concentration of spinning solution, or adjusting space between a nozzle(2) and a collector(4), or adjusting feed speed of an elongated sheet is used.

The following description explains manufacturing method of heat-resistant nanofiber filter electrospinning polyvinylidene fluoride(PVDF) on a cellulose substrate using, and coating ceramic using the electrospinning apparatus.

First, in the present invention, polyvinylidene fluoride is used as polymer of spinning solution, and a cellulose substrate(100) is used as an elongated sheet.

Moreover, polyvinylidene fluoride which dissolved the polyvinylidene fluoride in organic solvent is provided to a spinning solution main tank of the electrospinning apparatus(10). Polyvinylidene fluoride solution provided in the spinning solution main tank is consecutively and quantitatively provided to a plurality of nozzle(2) of a nozzle block(3) provided high vlotage through a metering pump. Polyvinylidene fluoride solution provided to each of the nozzle(2) is jetted on the cellulose substrate(100) located on a collector(4) flowing high voltage through the nozzle(2), and forms polyvinylidene fluoride nanofiber non-woven fabric.

Here, in a front-end block(20a) of the electrospinning apparatus(10), the cellulose substrate(100) laminated polyvinylidene fluoride nanofiber is carried from the front-end block(20a) to a rear-end block(20b) by a supply roller(11) operated by a motor(not shown) driving and rotation of an auxiliary belt(6) driving by the supply roller(11) rotation, the process is repeated, and forms polyvinylidene fluoride nanofiber non-woven fabric on the cellulose substrate(100).

Meanwhile, the cellulose substrate(100) has excellent dimensional stability in high temperature and has feature of high heat-resisting property. Fine cellulose fiber has high crystalline and high modulas of elasticity in regard of forming fine porous structure, and essentially in high temperature dimensional stability is very excellent. Because of such feature, cellulose substrate(100) is used in consumer products such as high performance filter, functional paper, sheet for cooking, and air cleaning sheet, and in technical fields such as semiconductor device, board for wiring board, substrate of low linear coefficient of expansion material, and separator for electric condenser such as capacitor.

In an embodiment of the present invention, instead of an elongated sheet, the cellulose substrate(100) is used, but it does not limited thereto.

Here, spinning voltage provided to each block(20) of the electrospinning apparatus(10) is 1kV or more, and preferably 20kV or more.

After laminating formed polyvinylidene fluoride nanofiber non-woven fabric(200) on the cellulose substrate(100) through the electrospinning, by producing a ceramic coating film(300) on the polyvinylidene fluoride nanofiber non-woven fabric(200), manufactures a heat-resistane nanofiber filter.

A ceramic coating film is produced by adding inorganic particles and binder resin to acetone on the polyvinylidene fluoride nanofiber non-woven fabric and coating produced slurry.

Inorganic particles comprising the ceramic coating film(300) are $SiO_2$, $Al_2O_3$, $TiO_2$ $Li_3PO_4$, zeolite, MgO, CaO, $BaTiO_3$, $Li_2O$, LiF, LiOH, $Li_3N$, BaO, $Na_2O$, $Li_2C0_3$, $CaC0_3$, $LiAlO_2$, SiO, SnO, $SnO_2$, $PbO_2$, ZnO, $P_2O_5$, CuO, MoO, $V_2O_5$, $B_2O_3$, $Si_3N_4$, $CeO_2$, $Mn_3O_4$, $Sn_2P_2O_7$, $Sn_2B_2O_5$, $Sn_2BPO_6$, and mixture thereof, especially $SiO_2$ and $Al_2O_3$ are preferable.

In addition, the binder is any one or more selected from groups comprising polyvinylidene fluoride(PVDF), polymethyl methacylate(PMMA), polyvinyl alcohol(PVA), and carboxymethyl cellulose(CMS), etc., and it is used in coating

and attaching the inorganic particles on the polyvinylidene fluoride nanofiber non-woven fabric.

Also, coating method for forming the ceramic coating film(300) can use various coating methods such as chemical vapor deposition(CVD), physical vapor deposition(PVD), spray coating, dip coating, spin coating, and casting method, and especially coating by casting method is preferable.

Therefore, after laminating formed polyvinylidene fluoride nanofiber non-woven fabric(200) on the cellulose substrate(100), laminating formed the ceramic coating film(300), and a filter of the present invention is produced. The following description explains exemplary embodiments in detail. It is to be understood that the invention is not limited to the disclosed embodiments, but, on the contrary, is intended to cover various modifications and equivalent arrangements included within the spirit and scope of the appended claims. Exemplary embodiments introduced herein are provided to make disclosed contents thorough and complete to person of ordinary skill in the art.

Example 1

By dissolving polyamic acid(SANG-A FRONTEC Corp.) in dimethyl acetamide(DMAc) solvent, and producing polyamic acid solution with viscosity of 102,000cps, and the polyamic acid solution is injected to a spinning solution main tank. In a front-end block provided applied voltage of 15kV, and electrospinning polyamic acid solution on cellulose substrate with basis weight of 30gsm, and forms polyamic acid nanofiber non-woven fabric with thickness of 2.5$\mu$m and fiber diameter of 350nm. In a rear-end block provided applied voltage of 20kV, and electrospinning the polyamic acid solution on a polyamic nanofiber non-woven fabric with fiber diameter of 350nm, and forms polyamic acid nanofiber non-woven fabric with thickness of 2.5$\mu$m and fiber diameter of 150nm. After electrospinning, in a laminating device it goes through heat treatment in 150°C, imidization of polyamic acid, and manufactures a polyimide nanofiber filter. In this case, electrospinning is performed in conditions of the distance between an electrode and a collector is 40cm, spinning solution flow rate is 0.1mL/h, temperature 22°C, and humidity 20%.

Example 2

Except heat treatment performed in 250°C instead of 150°C, Example 2 performs the same process as Example 1, and manufactures a polyimide nanofiber filter.

Example 3

Except heat treatment performed in 350°C instead of 150°C, Example 3 performs the same process as Example 1, and manufactures a polyimide nanofiber filter.

Comparative example 1

Nylon 6 is dissolved in formic acid and produces nylon 6 solution, and the nylon 6 solution is injected to a spinning solution main tank. By electrospinning on a cellulose substrate on a collector with basis weight of 30gsm in conditions of applied voltage 20kV, spinning solution flow rate 0.1mL/h, temperature 22°C, humidity 20%, and going through a laminating device, nylon 6 nanofiber filter is produced.

Comparative example 2

By dissolving polyamic acid(SANG-A FRONTEC Corp.) in dimethyl acetamide(DMAc) solvent, and producing polyamic acid solution with concentration of 20weight% and viscosity of 102,000cps, and the polyamic acid solution is injected to a spinning solution main tank. In a front-end block provided applied voltage of 15kV, and electrospinning polyamic acid solution on cellulose substrate with basis weight of 30gsm, and forms polyamic acid nanofiber non-woven fabric with thickness of 5$\mu$m and fiber diameter of 350nm. In this case, electrospinning is performed in conditions of the distance between an electrode and a collector is 40cm, spinning solution flow rate is 0.1mL/h, temperature 22°C, humidity 20%. After electrospinning, in a laminating device going through heat treatment in 150°C, imidization of polyamic acid, and manufactures a polyimide nanofiber filter.

Evaluation example 1: thermal shrinkable rate evaluation

In example 1 to 3 and comparative example 1 to 2, after cutting each produced filter in 3cm x 3cm, after stored in 190°C for 30minutes, and evaluated thermal shrinkable rate. The result is in the following Table 1.

Evaluation example 2: filtering efficiency measurement

In example 1 to 3 and comparative example 1 to 2, in order to measure each produced filter efficiency, DOP test method is used. DOP test method is automation filter analyzer(AFT) of TSI 3160(TSI Incorporated) for measuring efficiency of dioctyl phthalate(DOP), and it can measure permeability of filter medium material, filter efficiency, and differential pressure. The automation analyzer makes DOP in desired particle size and penetrates it on a filter sheet, and it is a device measuring speed of air, DOP filtering efficiency, air permeability, etc. in coefficient method automatically, and it is a very important device in high efficiency filter.

DOP% efficiency is defined as follows:

```
DOP% transmissivity = 1 - 100 (DOP concentration downstream/
                                    DOP concentration upstream)
```

In exemplary 1 to 3 and comparative example 1 to 2, filtering efficiency of each produced filter is measured according to the method mentioned above, and the result is shown in the following table 2.

[Table 1]

| | Example 1~3 | Comparative Example 1 | Comparative Example 2 |
|---|---|---|---|
| thermal shrinkable rate (%) | <3% | 10% | 5% |

[Table 2]

| | Example 1~3 | Comparative Example 1 | Comparative Example 2 |
|---|---|---|---|
| 0.35$\mu$m DOP Filtering efficiency(%) | >99% | 90% | 89% |

As shown in the Table 1 and Table 2, polyimide nanofiber filter manufactured through example 1 to 3 of the present invention is excellent in thermal shrinkable rate and efficiency compared to filter produced in comparative example 1 and 2.

Evaluation example 3: pressure drop and filter sustainability measurement

Nanofiber filter each produced in example 1 to 3 and comparative example 1 and 2 measures pressure drop by ASHRAE 52.1 according to flow rate of 50$\mu$g/$m^3$, and measures filter sustainability according to this, and the result is shown in the following Table 3.

[Table 3]

| | Example 1 to 3 | Comparative Example 1 to 2 |
|---|---|---|
| Pressure drop(in.w.g) | <4 | >8 |
| Filter sustainability(month) | 6.7 | 4.1 |

According to Table 3, filter produced through example 1 to 3 of the present invention has low pressure drop so less pressure loss, and filter sustainability is longer which results in excellence in durability comparing to filter produced in comparative example 1 and 2.

Example 4

Polyacrylonitrile(Hanil Synthetic Fiber Co., Ltd.) with weight average molecular weight of 157,000 is dissolved in dimethylformamide and produces polyacrylonitrile solution. The polyacrylonitrile solution is injected to a spinning solution main tank, in a front-end block is provided applied voltage of 15kV, and in a rear-end block is provided applied voltage of 20kV and electrospinning on a cellulose substrate with basis weight of 30gsm. In the front-end block formed polyacrylonitrile nanofiber non-woven fabric with thickness of 2.5$\mu$m and fiber diameter of 350nm on a cellulose substrate.

In a rear-end block laminating formed polyacrylonitrile nanofiber non-woven fabric with thickness of 2.5μm and fiber diameter of 150nm on the polyacrylonitrile nanofiber non-woven fabric with thickness of 2.5μm and fiber diameter of 350nm, and produces a polyacrylonitrile nanofiber filter. In this case, electrospinning is performed in conditions of the distance between an electrode and a collector is 40cm, spinning solution flow rate is 0.1mL/h, temperature 22°C, and humidity 20%.

Example 5

Polyacrylonitrile(Hanil Synthetic Fiber Co., Ltd.) with weight average molecular weight of 157,000 is dissolved in dimethylformamide and produces polyacrylonitrile solution. The polyacrylonitrile solution is injected to a spinning solution main tank, in a front-end block is provided applied voltage of 15kV, and in a rear-end block is provided applied voltage of 20kV and electrospinning on a cellulose substrate. In the front-end block formed polyacrylonitrile nanofiber non-woven fabric with thickness of 3μm and fiber diameter of 350nm on a cellulose substrate. In a rear-end block laminating formed polyacrylonitrile nanofiber non-woven fabric with thickness of 2μm and fiber diameter of 150nm on the polyacrylonitrile nanofiber non-woven fabric with thickness of 3μm and fiber diameter of 350nm, and produces a polyacrylonitrile nanofiber filter. In this case, electrospinning is performed in conditions of the distance between an electrode and a collector is 40cm, spinning solution flow rate is 0.1mL/h, temperature 22°C, and humidity 20%.

Example 6

Polyacrylonitrile(Hanil Synthetic Fiber Co., Ltd.) with weight average molecular weight of 157,000 is dissolved in dimethylformamide and produces polyacrylonitrile solution. The polyacrylonitrile solution is injected to a spinning solution main tank, in a front-end block is provided applied voltage of 15kV, and in a rear-end block is provided applied voltage of 20kV and electrospinning on a cellulose substrate. In the front-end block formed polyacrylonitrile nanofiber non-woven fabric with thickness of 2μm and fiber diameter of 350nm on a cellulose substrate. In a rear-end block laminating formed polyacrylonitrile nanofiber non-woven fabric with thickness of 3μm and fiber diameter of 150nm on the polyacrylonitrile nanofiber non-woven fabric with thickness of 2μm and fiber diameter of 350nm, and produces a polyacrylonitrile nanofiber filter. In this case, electrospinning is performed in conditions of the distance between an electrode and a collector is 40cm, spinning solution flow rate is 0.1mL/h, temperature 22°C, and humidity 20%.

Example 7

Except modifying polyacrylonitrile solution in example 4 to polyethersulfone solution dissolved polyethersulfone in dimethylacetamide(DMAc) solvent, Example 7 performs electrospinning in the same condition and manufactures a nanofiber filter.

Example 8

Except modifying polyacrylonitrile solution in example 5 to polyethersulfone solution dissolved polyethersulfone in dimethylacetamide(DMAc) solvent, Example 8 performs electrospinning in the same condition and manufactures a nanofiber filter.

Example 9

Except modifying polyacrylonitrile solution in example 6 to polyethersulfone solution dissolved polyethersulfone in dimethylacetamide(DMAc) solvent, Example 9 performs electrospinning in the same condition and manufactures a nanofiber filter.

Example 10

Nylon 6 solution is manufactured by dissolving nylyon 6 in formic acid, and the nylon 6 solution is injected to a spinning solution main tank. In a front-end block provided applied voltage of 15kV, and electrospinning nylon 46 solution on a cellulose substrate with basis weight of 30gsm, and forms nylon 6 nanofiber non-woven fabric with thickness of 2.5μm and fiber diameter of 350nm. In a rear-end block provided applied voltage of 20kV, and electrospinning the nylon 6 solution on a nylon 6 non-woven fabric with fiber diameter of 350nm, and forms nylon 6 nanofiber non-woven fabric with thickness of 2.5 μm and fiber diameter of 150nm. After electrospinning, in a laminating device, going though heat and pressure treatment, and manufactures a nylon 6 nanofiber filter. In this case, electrospinning is performed in conditions of the distance between an electrode and a collector is 40cm, spinning solution flow rate is 0.1mL/h, temperature

22°C, humidity 20%.

Example 11

Except modifying nylon 6 in example 10 to nylon 46, example 11 performs electrospinning in the same condition, and manufactures a nanofiber filter.

Example 12

Except modifying nylon 6 in example 10 to nylon 66, example 11 performs electrospinning in the same condition, and manufactures a nanofiber filter.

Comparative Example 3

Nylon 6 solution is manufactured by dissolving nylyon 6 in formic acid, and the nylon 6 solution is injected to a spinning solution main tank. In conditions of applied voltage is 20kV, spinning solution flow rate is 0.1mL/h, temperature 22°C, humidity 20%, electrospinning on a substrate with basis weight of 30gsm on a collector, and forms a nylon 6 nanofiber filter with thickness of 5$\mu$m and fiber diameter of 350nm.

Comparative example 4

Polyacrylonitrile(Hanil Synthetic Fiber Co., Ltd.) with weight average molecular weight of 157,000 is dissolved in dimethylformamide and produces polyacrylonitrile solution. The polyacrylonitrile solution is injected to a spinning solution main tank, spinning applied voltage is provided 15kVm electrospinning on a substrate with basis weight of 30gsm, and forms polyacrylonitrile nanofiber non-woven fabric with thickness of 5$\mu$m and fiber diameter of 350nm on a cellulose substrate. In this case, electrospinning is performed in conditions of the distance between an electrode and a collector is 40cm, spinning solution flow rate is 0.1mL/h, temperature 22°C, and humidity 20%.

Evaluation Example 4: thermal shrinkable rate evaluation

Thermal shrinkable rate of nanofiber filter each produced in example 4 to 9 and comparative example 3 and 4 evaluated in the same method as evaluation example 1, and the result is shown in the following table 4.

Evaluation Example 5: filtering efficiency measurement

Filtering efficiency of nanofiber filter each produced in example 4 to 12 and comparative example 3 and 4 evaluated in the same method as evaluation example 2, and the result is shown in the following table 5.

[Table 4]

| | Example 4 to 6 | Example 7 to 9 | Comparative Example 3 | Comparative Example 4 |
|---|---|---|---|---|
| Thermal shrinkable Rate (%) | <2 | <3 | 10 | 4 |

[Table 5]

| | Example 4 | Example 5 | Example 6 | Example 7 | Example 8 | Example 9 | Example 10 to 12 | Comparative example 3 | Comparative example 4 |
|---|---|---|---|---|---|---|---|---|---|
| 0.35μm DOP Filter efficiency (%) | 98 | 98.2 | 98.1 | 98 | 98.1 | 98 | >95 | 90 | 90.4 |

According to the table 4 and table 5, nanofiber filter produced through example 4 to 12 of the present invention has excellent heat-resisting property and filtering efficiency compared to filter produced in example 3 and 4.

Evaluation example 6: pressure drop and filter sustainability measurement

Nanofiber filter each produced in example 4 to 12 and comparative example 3 and 4 measured in the same method as example 3, and the result is shown in the following table 6.

[Table 6]

| | Example 4 to 6 | Example 7 to 9 | Example 10 | Example 11 | Example 12 | Comparative example 3-4 |
|---|---|---|---|---|---|---|
| Pressure drop(in.w.g) | <4.2 | <4 | 4.2 | 3.9 | 4.1 | >8 |
| Filter sustainability(month) | 6.9 | 6.7 | 6.5 | 6.8 | 6.6 | 4.1 |

According to Table 6, filter produced through example 4 to 12 of the present invention has low pressure drop so less pressure loss, and filter sustainability is longer which results in excellence in durability compared to filter produced in comparative example 3 and 4.

Example 13

Meta-aramid with viscosity of 50,000cps and solid content of 20weight% is dissolved in dimethylacetamide(DMAc) and manufactures meta-aramid solution, and injected to a spinning solution main tank connected to a front-end block. Also, polyamic acid with weight average molecular weight of 100,000 is dissolved in dimethylacetamide(DMAc) solvent and manufactures polyamic acid solution, and injected the polyamic acid solution to a spinning solution main tank connected to a rear-end block. Electrospinning on a cellulose substrate on a collector in electrospinning conditions of the distance between an electrode and a collector is 40cm, applied voltage is 20kV, spinning solution flow rate is 0.1mL/h, temperature 22°C, and humidity 20%. In this case, by electrospinning performed in a front-end block on a cellulose substrate laminating formed meta-aramid nanofiber non-woven fabric with thickness of 2.5$\mu$m, and by electrospinning performed in a rear-end block, laminating formed polyamic acid nanofiber non-woven fabric with thickness of 2.5$\mu$m on meta-aramid nanofiber non-woven fabric. After going through heat treatment in 150°C, imidization of polyamic acid nanofiber non-woven fabric, and produces a meta-aramid/polyimide multi-layered nanofiber filter.

Example 14

Meta-aramid with viscosity of 50,000cps and solid content of 20weight% is dissolved in dimethylacetamide(DMAc) and manufactures meta-aramid solution, and injected to a spinning solution main tank connected to a front-end block. Also, polyamic acid with weight average molecular weight of 100,000 is dissolved in dimethylacetamide(DMAc) solvent and manufactures polyamic acid solution, and injected the polyamic acid solution to a spinning solution main tank connected to a rear-end block. Electrospinning on a cellulose substrate on a collector in electrospinning conditions of the distance between an electrode and a collector is 40cm, applied voltage is 20kV, spinning solution flow rate is 0.1mL/h, temperature 22°C, and humidity 20%. In this case, by electrospinning performed in a front-end block on a cellulose substrate laminating formed meta-aramid nanofiber non-woven fabric with thickness of 3$\mu$m, and by electrospinning performed in a rear-end block, laminating formed polyamic acid nanofiber non-woven fabric with thickness of 2$\mu$m on meta-aramid nanofiber non-woven fabric. After going through heat treatment in 150°C, imidization of polyamic acid nanofiber non-woven fabric, and produces a meta-aramid/polyimide multi-layered nanofiber filter.

Example 15

Meta-aramid with viscosity of 50,000cps and solid content of 20weight% is dissolved in dimethylacetamide(DMAc) and manufactures meta-aramid solution, and injected to a spinning solution main tank connected to a front-end block. Also, polyamic acid with weight average molecular weight of 100,000 is dissolved in dimethylacetamide(DMAc) solvent and manufactures polyamic acid solution, and injected the polyamic acid solution to a spinning solution main tank connected to a rear-end block. Electrospinning on a cellulose substrate on a collector in electrospinning conditions of the distance between an electrode and a collector is 40cm, applied voltage is 20kV, spinning solution flow rate is 0.1mL/h, temperature 22°C, and humidity 20%. In this case, by electrospinning performed in a front-end block on a cellulose substrate laminating formed meta-aramid nanofiber non-woven fabric with thickness of 2$\mu$m, and by electro-

spinning performed in a rear-end block, laminating formed polyamic acid nanofiber non-woven fabric with thickness of 3$\mu$m on meta-aramid nanofiber non-woven fabric. After going through heat treatment in 150°C, imidization of polyamic acid nanofiber non-woven fabric, and produces a meta-aramid/polyimide multi-layered nanofiber filter.

Example 16

Polyacrylonitrile(Hanil Synthetic Fiber Co., Ltd.) with weight average molecular weight of 157,000 is dissolved in dimethylformamide(DMF) and produces polyacrylonitrile solution, and the polyacrylonitrile solution is injected to a spinning solution main tank. Also, meta-aramid with viscosity of 50,000cps and solid content of 20weight% is dissolved in dimethylacetamide(DMAc) and produces meta-aramid solution, and meta-aramid solution is injected to a spinning solution main tank connected to a rear-end block. Then spinning solution is provided from each spinning solution main tank through nozzle of each block, and electrospinning is performed. In this case, by electrospinning performed in a front-end block laminating formed polyacrylonitrile nanofiber non-woven fabric with thickness of 2.5$\mu$m on a cellulose substrate with basis weight of 30gsm, and by electrospinning performed in a rear-end block, laminating formed meta-aramid nanofiber non-woven fabric with thickness of 2.5$\mu$m on polyacrylonitrile nanofiber non-woven fabric. In this case, electrospinning is performed in conditions of the distance between an electrode and a collector is 40cm, applied voltage is 20kV, spinning solution flow rate is 0.1mL/h, temperature 22°C, and humidity 20%.

Example 17

Polyacrylonitrile(Hanil Synthetic Fiber Co., Ltd.) with weight average molecular weight of 157,000 is dissolved in dimethylformamide(DMF) and produces polyacrylonitrile solution, and the polyacrylonitrile solution is injected to a spinning solution main tank. Also, polyamic acid with weight average molecular weight of 100,000 is dissolved in dimethylacetamide(DMAc) solvent and produces polyamic acid solution, and the polyamic acid solution is injected to a spinning solution main tank connected to a rear-end block. Then spinning solution is provided from each spinning solution main tank through nozzle of each block, and electrospinning is performed. In this case, by electrospinning performed in a front-end block laminating formed polyacrylonitrile nanofiber non-woven fabric with thickness of 2.5$\mu$m on a cellulose substrate with basis weight of 30gsm, and by electrospinning performed in a rear-end block, laminating formed polyamic acid nanofiber non-woven fabric with thickness of 2.5$\mu$m on polyacrylonitrile nanofiber non-woven fabric. Then going through heat-treatment in 150°C, imidization of polyamic acid nanofiber non-woven fabric, and modifies polyamic acid nanofiber non-woven fabric to polyimide nanofiber non-woven fabric. In this case, electrospinning is performed in conditions of the distance between an electrode and a collector is 40cm, applied voltage is 20kV, spinning solution flow rate is 0.1mL/h, temperature 22°C, and humidity 20%.

Example 18

Polyacrylonitrile(Hanil Synthetic Fiber Co., Ltd.) with weight average molecular weight of 157,000 is dissolved in dimethylformamide(DMF) and produces polyacrylonitrile solution, and the polyacrylonitrile solution is injected to a spinning solution main tank. Also, polyether sulfone with viscosity of 1,200cps and solid content of 20weight% is dissolved in dimethylacetamide(DMAc) and produces polyether sulfone solution, and the polyether sulfone solution is injected to a spinning solution main tank connected to a rear-end block. Then spinning solution is provided from each spinning solution main tank through nozzle of each block, and electrospinning is performed. In this case, by electrospinning performed in a front-end block laminating formed polyacrylonitrile nanofiber non-woven fabric with thickness of 2.5$\mu$m on a cellulose substrate with basis weight of 30gsm, and by electrospinning performed in a rear-end block, laminating formed polyether sulfone nanofiber non-woven fabric with thickness of 2.5$\mu$m on polyacrylonitrile nanofiber non-woven fabric. In this case, electrospinning is performed in conditions of the distance between an electrode and a collector is 40cm, applied voltage is 20kV, spinning solution flow rate is 0.1mL/h, temperature 22°C, and humidity 20%.

Comparative Example 5

By dissolving nylon 6 in formic acid, nylon 6 solution is produced, and the nylon 6 solution is injected to a spinning solution main tank. Electrospinning is performed in conditions of the distance between an electrode and a collector is 40cm, applied voltage is 20kV, spinning solution flow rate is 0.1mL/h, temperature 22°C, and humidity 20%, on a cellulose substrate located on a collector making nanofiber thickness of 5$\mu$m, and going through a laminating device, a nylon 6 nanofiber filter is manufactured.

Comparative Example 6

Meta-aramid with viscosity of 50,000cps and solid content of 20weight% is dissolved in dimethylacetamide(DMAc) and manufactures meta-aramid solution. The meta-aramid solution is injected to a spinning solution main tank, after providing spinning applied voltage of 20kV, electrospinning on a cellulose substrate with basis weight of 30gsm, and produces a meta-aramid nanofiber filter with thickness of 5$\mu$m. In this case, electrospinning is performed in conditions of the distance between an electrode and a collector is 40cm, spinning solution flow rate is 0.1mL/h, temperature 22°C, and humidity 20%.

Comparative Example 7

A cellulose substrate with basis weight of 30gsm is used as a filter medium.

Comparative Example 8

Except for using polyacrylonitrile solution produced by dissolving polyacrylonitrile solution, which dissolved polyacrylonitrile(Hanil Synthetic Fiber Co., Ltd.) with weight average molecular weight of 157,000 in dimethylformamide(DMF), in dimethyl formamide instead of meta-aramid solution, comparative example 8 performs the same process as comparative example 6, and produces a polyacrylonitrile nanofiber filter.

Evaluation Example 7: thermal shrinkable rate evaluation

thermal shrinkable rate of filter each produced in example 13 to 18 and comparative example 5 to 8 is evaluated in the same method as evaluation example 1, and the result is shown in the following table 7.

Evaluation example 8: filtering efficiency measurement

Filtering efficiency of a filter each produced in example 13 to 18 and comparative example 5 to 8 is evaluated in the same method as evaluation example 2, and the result is shown in the following table 8.

[Table 7]

| | Example 13-15 | Example 16-18 | Comparative Example 5 | Comparative Example 6 | Comparative Example 7 | Comparative Example 8 |
|---|---|---|---|---|---|---|
| Thermal shrinkable rate (%) | <3 | <3 | 12 | 7 | 12 | 8 |

[Table 8]

| | Example 13 | Example 14 | Example 15 | Example 16 | Example 17 | Example 18 | Compara tive Example 5 | Compara tive Example 6 | Compara tive Example 7 | Compara tive Example 8 |
|---|---|---|---|---|---|---|---|---|---|---|
| 0.35$\mu$m DOP Filtering efficiency (%) | 94.5 | 94 | 95.2 | 94 | 95 | 94 | 60 | 90 | 60 | 89 |

According to the table 7 and table 8, a multi-layered nanofiber filter each produced in example 13 to 18 has excellent thermal shrinkable rate and filtering efficiency compared to a filter each produced in comparative example 5 to 8.

Example 19

By dissolving polysiloxane(DOW CORNINGMB50-010) having number average molecular weight of 50,000 in acetone solvent and producing polysiloxane solution of 20weight%, and providing it to a spinning solution main tank of the electrospinning apparatus, in each block, the same polysiloxane solution is provided to a nozzle. After providing applied voltage of 15kV to a front-end block located in front-end of the block, and in a rear-end block, providing applied voltage of 20kV, and electrospinning polysiloxane solution on a cellulose substrate with basis weight of 30gsm. In the front-end block, on the cellulose substrate, polysiloxane nanofiber non-woven fabric with thickness of 2.5$\mu$m and average fiber diameter of 350nm, and in the rear-end block, on the polysiloxane nanofiber non-woven fabric with fiber diameter of 350nm, laminating formed polysiloxane nanofiber non-woven fabric with thickness of 2.5$\mu$m and average fiber diameter of 150nm, and manufactures a polysiloxane nanofiber filter. In this case, the distance between an electrode and a collector is 40cm, spinning solution flow rate is 0.1mL/h, temperature 22°C, and humidity 20%.

Example 20

Except for using a meta-aramid substrate with the same basis weight instead of a cellulose substrate, example 20 performs the same process as example 1, and produces a nanofiber filter.

Comparative Example 9

By dissolving nylon 6 in formic acid, nylon 6 solution is produced, and the nylon 6 solution is injected to a spinning solution main tank. Electrospinning is performed in conditions of applied voltage is 20kV, spinning solution flow rate is 0.1mL/h, temperature 22°C, and humidity 20%, on a cellulose substrate with basis weight of 30gsm located on a collector, and going through a laminating device, a nylon 6 nanofiber filter is manufactured.

Comparative Example 10

By dissolving polysiloxane(DOW CORNINGMB50-010) having number average molecular weight of 50,000 in acetone solvent and producing polysiloxane solution of 20weight%, and providing it to a spinning solution main tank of the electrospinning apparatus, in each block, the same polysiloxane solution is provided to a nozzle. After providing applied voltage of 15kV to each of the block, on a cellulose substrate with basis weight of 30gsm, by electrospinning polysiloxane solution, and laminating formed polysiloxane nanofiber non-woven fabric with thickness of 5$\mu$m and fiber diameter of 350nm, and manufactures a polysiloxane nanofiber filter.

Evaluation Example: thermal shrinkable rate evaluation

thermal shrinkable rate of a filter each produced in example 19 and 20 and comparative example 9 and 10 is evaluated in the same method as evaluation example 1, and the result is shown in the following table 9.

Evaluation Example 10: filtering efficiency measurement

Filtering efficiency of a filter each produced in example 19 and 20 and comparative example 9 and 10 is evaluated in the same method as evaluation example 2, and the result is shown in the following table 9.

Evaluation Example 11: pressure drop and filter sustainability measurement

Pressure drop and filter sustainability of a filter each produced in example 19 and 20 and comparative example 9 and 10 is evaluated in the same method as evaluation example 3, and the result is shown in the following table 10.

[Table 9]

| | Example 19 | Example 20 | Comparative Example 9 | Comparative Example 10 |
|---|---|---|---|---|
| Thermal shrinkable rate (%) | 3 | 2 | 10 | 5 |
| Filtering efficiency (%) | 90 | 89 | 80 | 78 |

[Table 10]

| | Example 19 to 20 | Comparative Example 9 to 10 |
|---|---|---|
| Pressure drop (in.w.g.) | <4 | >8 |
| Filter sustainability (month) | <6 | >4 |

According to table 9, filters produced by example 19 and 20 have excellent thermal shrinkable rate compared to a filter produced in comparative example 9, and comparing with comparative example 10, thermal shrinkable rate is similar but filters produced by example 19 and 20 are excellent in terms of filtering efficiency.

Also, according to table 10, filters produced by examples 19 and 20 compared to comparative example 1 and 2 have low pressure drop and longer filter sustainability which result in excellence in durability.

Example 21

In the first section, polyethersulfone with viscosity of 1,200cps and solid content of 20weight% is dissolved in dimethylacetamide(DMAc) and produces polyethersulfone electrospinning solution dope. In the second section, polyamic acid(PAA) with weight average molecular weight of 100,000 is dissolved in mixed solvent(THF/DMAc) of tetrahydrofuran(THF) and dimethylacetamide(DMAc) and produces polyamic acid dope. In electrospinning conditions of the distance between an electrode and a collector is 40cm, applied voltage is 15kV, spinning solution flow rate is 0.1mL/h, temperature 22°C, and humidity 20%, forming polyethersulfone nanofiber with thickness of 3$\mu$m on a meta-aramid substrate with basis weight of 30gsm, a collector moves in predetermined speed, spinning polyamic acid nanofiber making thickness of 3$\mu$m on polyethersulfone nanofiber layer, and after forming nanofiber layer, by heating in 200°C, imdization of polyamic acid nanofiber to polyimide nanofiber, and forms a multi-layered filter medium.

Example 22

In the first section, polyethersulfone with viscosity of 1,200cps and solid content of 20weight% is dissolved in dimethylacetamide(DMAc) and produces polyethersulfone electrospinning solution dope. In the second section, polyamic acid(PAA) with weight average molecular weight of 100,000 is dissolved in mixed solvent(THF/DMAc) of tetrahydrofuran(THF) and dimethylacetamide(DMAc) and produces polyamic acid dope. In electrospinning conditions of the distance between an electrode and a collector is 40cm, applied voltage is 15kV, spinning solution flow rate is 0.1mL/h, temperature 22°C, and humidity 20%, forming polyethersulfone nanofiber with thickness of 1$\mu$m on a meta-aramid substrate with basis weight of 30gsm, a collector moves in predetermined speed, spinning polyamic acid nanofiber making thickness of 5$\mu$m on polyethersulfone nanofiber layer, and after forming nanofiber layer, by heating in 200°C, imdization of polyamic acid nanofiber to polyimide nanofiber, and forms a multi-layered filter medium.

Example 23

Except for making polyethersulfone nanofiber thickness to 5$\mu$m and polyamic acid nanofiber thickness to 1$\mu$m, example 23 performs the same process as example 21, and produces a multi-layered filter medium.

Example 24

In the first section, polyethersulfone with viscosity of 1,200cps and solid content of 20weight% is dissolved in dimethylacetamide(DMAc) and produces polyethersulfone electrospinning solution dope. In the second section, polyamic acid(PAA) with weight average molecular weight of 100,000 is dissolved in mixed solvent(THF/DMAc) of tetrahydrofuran(THF) and dimethylacetamide(DMAc) and produces polyamic acid dope. In electrospinning conditions of the distance between an electrode and a collector is 40cm, spinning solution flow rate is 0.1mL/h, temperature 22°C, and humidity 20%, forming polyethersulfone nanofiber with thickness of 3$\mu$m on a meta-aramid substrate with basis weight of 30gsm, forming nanofiber with fiber diameter of 400nm, a collector moves in predetermined speed, in the second section spinning polyamic acid nanofiber making thickness of 3$\mu$m on polyethersulfone nanofiber layer in applied voltage of 20kV, and after forming nanofiber layer with fiber diameter of 100nm, by heating in 200°C, imdization of polyamic acid nanofiber to polyimide nanofiber, and forms a multi-layered filter medium.

Example 25

In the first section, polyethersulfone with viscosity of 1,200cps and solid content of 20weight% is dissolved in dimethylacetamide(DMAc) and produces polyethersulfone electrospinning solution dope. In the second section, polyamic acid(PAA) with weight average molecular weight of 100,000 is dissolved in mixed solvent(THF/DMAc) of tetrahydrofuran(THF) and dimethylacetamide(DMAc) and produces polyamic acid dope. In electrospinning conditions of the distance between an electrode and a collector is 40cm, spinning solution flow rate is 0.1mL/h, temperature 22°C, and humidity 20%, forming polyethersulfone nanofiber with thickness of 3$\mu$m on a meta-aramid substrate with basis weight of 30gsm, forming nanofiber with fiber diameter of 100nm in applied voltage of 20kV, a collector moves in predetermined speed, in the second section spinning polyamic acid nanofiber making thickness of 3$\mu$m on polyethersulfone nanofiber layer in applied voltage of 12kV, and after forming nanofiber layer with fiber diameter of 400nm, by heating in 200°C, imdization of polyamic acid nanofiber to polyimide nanofiber, and forms a multi-layered filter medium.

Example 26

In the first section, meta-aramid with viscosity of 50,000cps and solid content of 20weight% is dissolved in dimethylacetamide(DMAc) and produces meta-aramid electrospinning solution dope. In the second section, polyamic acid(PAA) with weight average molecular weight of 100,000 is dissolved in mixed solvent(THF/DMAc) of tetrahydrofuran(THF) and dimethylacetamide(DMAc) and produces polyamic acid dope. In electrospinning conditions of the distance between an electrode and a collector is 40cm, applied voltage is 15kV, spinning solution flow rate is 0.1mL/h, temperature 22°C, and humidity 20%, forming meta-aramid nanofiber with thickness of 3$\mu$m on a meta-aramid substrate with basis weight of 30gsm, a collector moves in predetermined speed, in the second section spinning polyamic acid nanofiber making thickness of 3$\mu$m on meta-aramid nanofiber layer, and after forming nanofiber layer, by heating in 200°C, imdization of polyamic acid nanofiber to polyimide nanofiber, and forms a multi-layered filter medium.

Example 27

Except for using meta-aramid of 10weight% instead of solid content of 20weight%, meta-aramid nanofiber thickness is 1$\mu$m, and polyamic acid nanofiber thickness is 5$\mu$m, example 27 performs the same process as example 26, and manufactures a multi-layered filter medium.

Example 28

Except for making meta-aramid nanofiber thickness to 5$\mu$m and polyamic acid nanofiber thickness to 1$\mu$m, example 28 performs the same process as example 26, and produces a multi-layered filter medium.

Example 29

Except for forming meta-aramid nanofiber with fiber diameter of 400nm on a meta-aramid substrate, and forming polyamic acid nanofiber with fiber thickness of 100nm on a meta-aramid nanofiber layer, example 29 performs the same process as example 26, and produces a multi-layered filter medium.

Example 30

Except for forming meta-aramid nanofiber with fiber diameter of 100nm on a meta-aramid substrate, and forming polyamic acid nanofiber with fiber thickness of 400nm on a meta-aramid nanofiber layer, example 30 performs the same process as example 26, and produces a multi-layered filter medium.

Example 31

In the first section, polyamic acid(PAA) with weight average molecular weight of 100,000 is dissolved in mixed solvent(THF/DMAc) of tetrahydrofuran(THF) and dimethylacetamide(DMAc) and produces polyamic acid dope. In the second section, polysiloxane(DOW CORNINGMB50-010), which is among one of inorganic polymer and number average molecular weight is 50,000, is dissolved in acetone solvent and produces polysiloxane dope of 20weight%. In electrospinning conditions of the distance between an electrode and a collector is 40cm, applied voltage is 15kV, spinning solution flow rate is 0.1mL/h, temperature 22°C, and humidity 20%, forming polyamic acid nanofiber with thickness of 3$\mu$m on a meta-aramid substrate with basis weight of 30gsm, a collector moves in predetermined speed, and in the second section, spinning polyamic acid nanofiber making thickness of 3$\mu$m on polyamic acid nanofiber laminated side

and forming nanofiber layer, by heating in 200°C, imdization of polyamic acid nanofiber to polyimide nanofiber, and forms a multi-layered filter medium.

Example 32

Except for using meta-aramid dope produced by dissolving meta-aramid with viscosity of 50,000cps and solid content of 20weight% in dimethylacetamide(DMAc) instead of polyamic acid dope in the first section, example 32 performs the same process as example 31, and manufactures a filter medium.

Example 33

Except for using spinning solution produced by dissolving polyacrylonitrile(Hanil Synthetic) with weight average molecular weight of 157,000 in dimethylformamide(DMF) instead of polyamic acid dope in the first section, example 33 performs the same process as example 31, and manufactures a filter medium.

Example 34

Except for using spinning solution produced by dissolving polyvinylidene fluoride(KYNAR 741) with weight average molecular weight of 500,000 in dimethylacetamide(DMAc) solvent instead of polyamic acid dope in the first section, example 34 performs the same process as example 31, and manufactures a filter medium.

Example 35

Except for using polymer spinning solution by dissolving nylon 6 homopolymer which is one kind of polyamide in solvent with weight ratio of 5:5 in tetrafluoro acetic acid(TFA) and dichloromethane(DCM) instead of polyamic acid dope in the first section, example 35 performs the same process as example 31, and produces a filter medium.

Example 36

Except for using polyether sulfone dope produced by dissolving polyether sulfone with viscosity of 1,200cps and solid content of 20weight% in dimethylacetamide(DMAc), example 36 performs the same process as example 31, and produces a filter medium.

Comparative Example 11

By dissolving polyether sulfone with viscosity of 1,200cps and solid content of 20weight% in dimethylacetamide(DMAc) and produces polyether sulfone dope. In electrospinning conditions of the distance between an electrode and a collector is 40cm, applied voltage is 15kV, spinning solution flow rate is 0.1mL/h, temperature 22°C, and humidity 20%, forming polyether sulfone nanofiber with thickness of 6$\mu$m on a meta-aramid substrate with basis weight of 30gsm, and forms a filter medium.

Comparative Example 12

Except for using meta-aramid dope dissolving meta-aramid with viscosity of 50,000cps and solid content of 20weight% in dimethylacetamide(DMAc) instead of polyether sulfone dope, comparative example 12 performs the same process as comparative example 11, and manufactures a filter medium.

Evaluation Example 12: heat-resisting property evaluation

A filter each produced in example 21 to 36 and comparative example 11 and 12 is heated and pressured in nip pressure of 50kg/cm in temperature of 200°C, measures fiber contraction, and evaluates heat-resisting property, and the result is shown in the following table 11.

Evaluation Example: filtering efficiency measurement

Filtering efficiency of filter each produced in example 21 to 36 and comparative example 11 and 12 is measured in the same method as evaluation example 2, and the result is shown in the following table 12.

[Table 11]

| | Fiber contraction rate (%) |
|---|---|
| Example 21 | 3.0 |
| Example 22 | 2.6 |
| Example 23 | 3.5 |
| Example 24 | 3.0 |
| Example 25 | 3.0 |
| Example 26 | 2.9 |
| Example 27 | 2.5 |
| Example 28 | 3.3 |
| Example 29 | 2.9 |
| Example 30 | 2.9 |
| Example 31 | 3.0 |
| Example 32 | 2.8 |
| Example 33 | 2.8 |
| Example 34 | 3.3 |
| Example 35 | 3.1 |
| Example 36 | 3.2 |
| Comparative Example 11 | 5.0 |
| Comparative Example 12 | 5.0 |

[Table 12]

| | 0.35um DOP % |
|---|---|
| Example 21 | 95 |
| Example 22 | 95 |
| Example 23 | 95 |
| Example 24 | 99 |
| Example 25 | 99 |
| Example 26 | 95 |
| Example 27 | 95 |
| Example 28 | 95 |
| Example 29 | 99 |
| Example 30 | 99 |
| Example 31 | 95 |
| Example 32 | 95 |
| Example 33 | 96 |
| Example 34 | 95 |
| Example 35 | 96 |
| Example 36 | 96 |

(continued)

| | 0.35um DOP % |
|---|---|
| Comparative Example 11 | 85 |
| Comparative Example 12 | 85 |

According to the table 11 and table 12, a multi-layered nanofiber filter each produced in example 21 to 36 has excellent fiber contraction rate and filtering efficiency compared to a filter produced each in comparative example 11 and 12.

Example 37

Nylon 6 solution is manufactured by dissolving nylyon 6 in formic acid, and the nylon 6 solution is injected to a spinning solution main tank. In a front-end block provided applied voltage of 15kV, and electrospinning nylon 46 solution on a bicomponent substrate with basis weight of 30gsm, and laminating formed nylon 6 nanofiber non-woven fabric with thickness of 2.5$\mu$m and fiber diameter of 350nm. In a rear-end block provided applied voltage of 20kV, and electrospinning the nylon 6 solution on a nylon 6 non-woven fabric with fiber diameter of 350nm, and forms nylon 6 nanofiber non-woven fabric with thickness of 2.5$\mu$m and fiber diameter of 150nm. After electrospinning, in a laminating device, going though heat and pressure treatment, and manufacturing a filter comprising nylon 6 nanofiber non-woven fabric and a bicomponent substrate. In this case, electrospinning is performed in conditions of the distance between an electrode and a collector is 40cm, spinning solution flow rate is 0.1mL/h, temperature 22°C, and humidity 20%.

Example 38

Except for using nylon 46 instead of nylon 6, example 38 performs the same process as example 37, and produces a filter.

Example 39 9

Except for using nylon 66 instead of nylon 6, example 39 performs the same process as example 37, and produces a filter.

Example 40

Polyvinylidene fluoride of weight average molecular weight of 50,000 is dissolved in dimethyl acetamide and produces polyvinylidene fluoride solution, and the polyvinylidene fluoride solution is injected to a spinning solution main tank. In a front-end block, applied voltage is provided 15kV, and electrospinning polyvinylidene fluoride solution on a bicomponent substrate with basis weight of 30gsm, and laminating formed polyvinylidene fluoride nanofiber non-woven fabric having thickness of 2.5$\mu$m and fiber diameter of 350nm. In a rear-end block, applied voltage is provided 20kV, and the polyvinylidene fluoride solution used in the front-end electrospins on the polyvinylidene fluoride nanofiber non-woven fabric with fiber diameter of 350, and laminating formed polyvinylidene fluoride nanofiber non-woven fabric with thickness of 2.5$\mu$m and fiber diameter of 150nm. After electrospinning, in a laminating device heated and pressed, and finally producing a filter comprising polyvinylidene fluoride nanofiber non-woven fabric and a bicomponent substrate. In this case, electrospinning is performed in conditions of the distance between an electrode and a collector is 40cm, spinning solution flow rate is 0.1mL/h, temperature 22°C, and humidity 20%.

Example 41

Polyvinylidene fluoride with weight average molecular weight of 50,000 is dissolved in dimethyl acetamide and produces polyvinylidene fluoride solution, and the polyvinylidene fluoride solution is injected to a spinning solution main tank. In a front-end block, applied voltage is provided 15kV, and electrospinning polyvinylidene fluoride solution on a bicomponent substrate with basis weight of 30gsm, and laminating formed polyvinylidene fluoride nanofiber non-woven fabric having thickness of 3$\mu$m and fiber diameter of 350nm. In a rear-end block, applied voltage is provided 20kV, and the polyvinylidene fluoride solution used in the front-end electrospins on the polyvinylidene fluoride nanofiber non-woven fabric with fiber diameter of 350, and laminating formed polyvinylidene fluoride nanofiber non-woven fabric with thickness of 2$\mu$m and fiber diameter of 150nm. After electrospinning, in a laminating device heated and pressed, and finally

producing a filter comprising polyvinylidene fluoride nanofiber non-woven fabric and a bicomponent substrate. In this case, electrospinning is performed in conditions of the distance between an electrode and a collector is 40cm, spinning solution flow rate is 0.1mL/h, temperature 22°C, and humidity 20%.

Example 42

Polyvinylidene fluoride with weight average molecular weight of 50,000 is dissolved in dimethyl acetamide and produces polyvinylidene fluoride solution, and the polyvinylidene fluoride solution is injected to a spinning solution main tank. In a front-end block, applied voltage is provided 15kV, and electrospinning polyvinylidene fluoride solution on a bicomponent substrate with basis weight of 30gsm, and laminating formed polyvinylidene fluoride nanofiber non-woven fabric having thickness of 2$\mu$m and fiber diameter of 350nm. In a rear-end block, applied voltage is provided 20kV, and the polyvinylidene fluoride solution used in the front-end electrospins on the polyvinylidene fluoride nanofiber non-woven fabric with fiber diameter of 350, and laminating formed polyvinylidene fluoride nanofiber non-woven fabric with thickness of 3$\mu$m and fiber diameter of 150nm. After electrospinning, in a laminating device heated and pressed, and finally producing a filter comprising polyvinylidene fluoride nanofiber non-woven fabric and a bicomponent substrate. In this case, electrospinning is performed in conditions of the distance between an electrode and a collector is 40cm, spinning solution flow rate is 0.1mL/h, temperature 22°C, and humidity 20%.

Comparative Example 13

Nylon 6 solution is manufactured by dissolving nylyon 6 in formic acid, and the nylon 6 solution is injected to a spinning solution main tank. In conditions of applied voltage 15kV, spinning solution flow rate is 0.1mL/h, temperature 22°C, and humidity 20%, on a bicomponent substrate located on a collector, electrspinning is performed making thickness of 5$\mu$m and fiber diameter of 350nm, and going through a laminating device, a nylon 6 nanofiber filter is produced.

Comparative Example 14

Except for using polyvinylidene fluoride solution produced by dissolving polyvinylidene fluoride with weight average molecular weight of 50,000 in dimethyl acetamide instead of nylon 6 solution, comparative example performs the same process as comparative example 13 and produces a filter.

Evaluation Example 14: filtering efficiency measurement Filtering efficiency of filter each produced in example 37 to 42 and comparative example 13 and 14 is measured the same method as evaluation example 2, and the result is shown in the following table 13.

Evaluation example 15: pressure drop and filter sustainability measurement

Pressure drop and sustainability of filter each produced in example 37 to example 42 and comparative example 13 and 14 is measured the same method as evaluation example 3, and the result is shown in the following table 14.

[Table 13]

| | Example 37~39 | Example 40 | Example 41 | Example 42 | Comparative Example 13 | Comparative Example 14 |
|---|---|---|---|---|---|---|
| 0.35 DOP Filtering efficiency(%) | >95 | 95 | 93 | 96 | 89 | 88 |

[Table 14]

| | Example 37 | Example 38 | Example 39 | Example 40 | Example 41 | Example 42 | Comparative Example 13 | Comparative Example 14 |
|---|---|---|---|---|---|---|---|---|
| Pressure drop (in.w.g) | 5 | 4.6 | 5.1 | 5.1 | 4.8 | 5.3 | 8.1 | 8.3 |
| Filter sustainability (month) | 6 | 6.2 | 5.9 | 6 | 6.3 | 5.8 | 3 | 2.9 |

According to table 13 and table 14, a filter each produced in example 37 to example 42 compared to a filter each produced in comparative example 13 and 14 has excellent filtering efficiency and has low pressure drop which results in less pressure lose, and longer filter sustainability which results in excellence in durability.

Example 43

Polyacrylonitrile(Hanil Synthetic Fiber Co., Ltd.) with weight average molecular weight of 157,000 is dissolved in dimethylformamide(DMF) and produces polyacrylonitrile solution. The polyacrylonitrile solution is injected to a spinning solution main tank which is connected to a front-end block. Also, meta-aramid with viscosity of 50,000cps and solid content of 20weight% is dissolved in dimethylacetamide(DMAc) and produces meta-aramid solution, and the meta-aramid solution is injected to a spinning solution main tank connected to a middle block. Moreover, polyamic acid with weight average molecular weight of 100,000 is dissolved in dimethylacetamide(DMAc) solvent and produces polyamic acid solution, and the polyamic acid solution is injected to a spinning solution main tank connected to a rear-end block. Then spinning solution is provided from each spinning solution main tank through nozzle of each block, and electrospinning is performed. In this case, by electrospinning performed in a front-end block laminating formed polyacrylonitrile nanofiber non-woven fabric with thickness of 2$\mu$m on a cellulose substrate with basis weight of 30gsm, by electrospinning performed in a middle block, laminating formed meta-aramid nanofiber non-woven fabric with thickness of 2$\mu$m on the polyacrylonitrile nanofiber non-woven fabric, and by electrospinning performed in a rear-end block, laminating formed polyamic acid nanofiber non-woven fabric with thickness of 2$\mu$m on the meta-aramid nanofiber non-woven fabric. Then going through heat treatment in 150°C, imidization of polyamic acid nanofiber non-woven fabric, and modifying polyamic acid nanofiber non-woven fabric to polyimide nanofiber non-woven fabric. Electrospinning is performed in conditions of the distance between an electrode and a collector is 40cm, applied voltage is 20kV, spinning solution flow rate is 0.1mL/h, temperature 22°C, and humidity 20%.

Example 44

Except for forming thickness of polyacrylonitrile nanofiber non-woven fabric to 3$\mu$m and thickness of polyamic acid nanofiber non-woven fabric to 1$\mu$m, example 44 performs the same process as example 43, and produces a nanofiber filter.

Example 45

Except for forming thickness of polyacrylonitrile nanofiber non-woven fabric to 1$\mu$m and thickness of polyamic acid nanofiber non-woven fabric to 3$\mu$m, example 45 performs the same process as example 43, and produces a nanofiber filter.

Comparative Example 15

By using cellulose substrate with basis weight of 30gsm and produces a filter medium.

Comparative Example 16

Polyacrylonitrile(Hanil Synthetic Fiber Co., Ltd.) with weight average molecular weight of 157,000 is dissolved in dimethylformamide(DMF) and produces polyacrylonitrile solution. The polyacrylonitrile solution is injected to a spinning solution main tank, after providing spinning applied voltage of 20kV, electrospinning on a cellulose substrate with basis weight of 30gsm, and produces a polyacrylonitrile nanofiber filter with thickness of 6$\mu$m. In this case, electrospinning is performed in conditions of the distance between an electrode and a collector is 40cm, spinning solution flow rate is 0.1mL/h, temperature 22°C, and humidity 20%.

Evaluation Example 16: thermal shrinkable rate evaluation

Thermal shrinkable rate of filter each produced in example 43 to 45 and comparative example 15 and 16 is evaluated the same method as evaluation example 1, and the result is shown in the following table 15.

Evaluation Example 17: filtering efficiency measurement Filtering efficiency of filter each produced in example 43 to 45 and comparative example 15 and 16 is measured the same method as evaluation example 2, and the result is shown in the following example 16.

[Table 15]

| | Example 43 to 45 | Comparative Example 15 | Comparative Example 16 |
|---|---|---|---|
| Thermal shrinkable rate (%) | <3 | 12 | 7.7 |

[Table 16]

| | Example 43 | Example 44 | Example 45 | Comparative Example 15 | Comparative Example 16 |
|---|---|---|---|---|---|
| 0.35$\mu$m DOP Filtering efficiency(%) | 95 | 95.2 | 95.1 | 60 | 89 |

According to the table 15 and table 16, a nanofiber filter each produced in example 42 to 45 compared to a filter each produced in comparative example 15 and 16 has excellent thermal shrinkable rate and excellent filtering efficiency.

Example 46

In the first section, polyvinylidene fluoride(KYNAR 741) with weight average molecular weight of 500,000 is dissolved in dimethylacetamide(DMAc) solvent and produces spinning solution, and in the second section, polyacrylonitrile(Hanil Synthetic) with weight average molecular weight of 157,000 is dissolved in dimethylformamide(DMF) and produces spinning solution. In the first section, in electrospinning conditions of the distance between an electrode and a collector is 40cm, applied voltage is 15kV, spinning solution flow rate is 0.1mL/h, temperature 22°C, and humidity 20%, forming polyvinylidene fluoride nanofiber with thickness of 3$\mu$m and average diameter of 500nm on a meta-aramid substrate with basis weight of 30gsm, and a collector is moved in predetermined speed, in the second section, after laminating polyacrylonitrile nanofiber making thickness of 3$\mu$m and average diameter of 200nm, laminating a cellulose substrate with basis weight of 30gsm on polyacrylonitrile nanofiber layer, and forms a filter medium formed nanofiber layer between substrates.

Example 47

In the first section, meta-aramid with viscosity of 50,000cps and solid content of 20weight% is dissolved in dimethylacetamide(DMAc) and produces meta-aramid spinning solution, and in the second section, polyamic acid(PAA) with weight average molecular weight of 100,000 is dissolved in mixed solvent(THF/DMAc) of tetrahydrofuran(THF) and dimethylacetamide(DMAc), and produces polyamic acid dope. In the first section, in electrospinning conditions of the distance between an electrode and a collector is 40cm, applied voltage is 15kV, spinning solution flow rate is 0.1mL/h, temperature 22°C, and humidity 20%, forming meta-aramid nanofiber with thickness of 3$\mu$m and average diameter of 500nm on a cellulose substrate with basis weight of 30gsm, and a collector is moved in predetermined speed, in the second section, after laminating precursor(polyamic acid) nanofiber making thickness of 3$\mu$m and average diameter of 200nm, laminating a meta-aramid substrate with basis weight of 30gsm on polyamic acid nanofiber layer, in order to imidization of polyamic acid nanofiber layer, in 200°C heating and laminating, and forms a filter medium formed nanofiber layer between substrates.

Example 48

In the first section, meta-aramid with viscosity of 50,000cps and solid content of 20weight% is dissolved in dimethylacetamide(DMAc) and produces meta-aramid spinning solution, and in the second section, polyacrylonitrile(Hanil Synthetic) with weight average molecular weight of 157,000 is dissolved in dimethylformamide(DMF) and produces spinning solution. In the first section, in electrospinning conditions of the distance between an electrode and a collector is 40cm, applied voltage is 15kV, spinning solution flow rate is 0.1mL/h, temperature 22°C, and humidity 20%, forming meta-aramid nanofiber with thickness of 3$\mu$m and average diameter of 500nm on a meta-aramid substrate with basis weight of 30gsm, and a collector is moved in predetermined speed, in the second section, after laminating polyacrylonitrile nanofiber making thickness of 3$\mu$m and average diameter of 200nm, laminating a cellulose substrate with basis weight of 30gsm on polyacrylonitrile nanofiber layer, and forms a filter medium formed nanofiber layer between substrates.

Example 49

In the first section, polyvinylidene fluoride(KYNAR 741) with weight average molecular weight of 500,000 is dissolved in dimethylacetamide(DMAc) solvent and produces spinning solution, and in the second section, polyamic acid(PAA) with weight average molecular weight of 100,000 is dissolved in mixed solvent(THF/DMAc) of tetrahydrofuran(THF) and dimethylacetamide(DMAc). In the first section, in electrospinning conditions of the distance between an electrode and a collector is 40cm, applied voltage is 15kV, spinning solution flow rate is 0.1mL/h, temperature 22°C, and humidity 20%, forming polyvinylidene fluoride nanofiber with thickness of 3$\mu$m and average diameter of 500nm on a cellulose substrate with basis weight of 30gsm, and a collector is moved in predetermined speed, in the second section, after laminating polyimide precursor(polyamic acid) nanofiber making thickness of 3$\mu$m and average diameter of 200nm, in order to put a meta-aramid substrate with basis weight of 30gsm on polyamic acid nanofiber layer, and imidization of polyamic acid nanofiber layer, in 200°C heating and laminating, and forms a filter medium formed nanofiber layer between substrates.

Example 50

In the first section, nylon 6 homopolymer which is one kind of polyamide is dissolved in solvent which has weight ratio 5:5 of tetrafluoroaceticacid(TFA) and dichloromethane(DCM) and produces spinning solution, and in the second section, polyethersulfone with viscosity of 1,200cps and solid content of 20weight% is dissolved in dimethylacetamide(DMAc), and produces polyethersulfone dope. In the first section, in electrospinning conditions of the distance between an electrode and a collector is 40cm, applied voltage is 15kV, spinning solution flow rate is 0.1mL/h, temperature 22°C, and humidity 20%, forming polyamide nanofiber with thickness of 3$\mu$m and average diameter of 500nm on a cellulose substrate with basis weight of 30gsm, and a collector is moved in predetermined speed, in the second section, after laminating polyethersulfone nanofiber making thickness of 3$\mu$m and average diameter of 200nm, putting a meta-aramid substrate with basis weight of 30gsm on polyethersulfone nanofiber layer, and laminating, and forms a filter medium formed nanofiber layer between substrates.

Comparative Example 17

Meta-aramid with viscosity of 50,000cps and solid content of 20weight% is dissolved in dimethylacetamide(DMAc) and produces meta-aramid dope. In electrospinning conditions of the distance between an electrode and a collector is 40cm, applied voltage is 15kV, spinning solution flow rate is 0.1mL/h, temperature 22°C, and humidity 20%, laminating meta-aramid nanofiber with thickness of 6$\mu$m on a cellulose substrate with basis weight of 30gsm, and forms a filter medium.

Evaluation Example 18: thermal shrinkable rate evaluation Thermal shrinkable rate of filter each produced in example 46 to 50 and comparative example 17 is evaluated the same method as evaluation example 1, and the result is shown in the following table 17.

Evaluation Example 19: filtering efficiency measurement

Filtering efficiency of filter each produced in example 46 to 50 and comparative example 17 is evaluated the same method as evaluation example 2, and the result is shown in the following table 17.

[Table 17]

| | Thermal shrinkable rate(%) | 0.35um DOP % |
|---|---|---|
| Example 46 | 2.5 | 98 |
| Example 47 | 2.4 | 98 |
| Example 48 | 2.5 | 97 |
| Example 49 | 2.5 | 98 |
| Example 50 | 2.4 | 98 |
| Comparative Example 17 | 5.0 | 85 |

According to the table 17, a filter each produced in example 46 to 50 compared to a filter produced in comparative example 17 has excellent thermal shrinkable rate and filtering efficiency.

Example 51

Polyethersulfone with viscosity of 1,200cps and solid content of 20weight% is dissolved in dimethyl formamide and produces spinning solution, and the spinning solution electrospins on a meta-aramid substrate in conditions of the distance between an electrode and a collector is 40cm, applied voltage 20kV, spinning solution flow rate is 0.1mL/h, temperature 22°C, and humidity 20%, laminating formed polyethersulfone nanofiber non-woven fabric with thickness of 5$\mu$m, and produces a filter.

Example 52

Polyethersulfone with viscosity of 1,200cps and solid content of 20weight% is dissolved in dimethyl formamide and produces polyethersulfone solution, and the polyethersulfone solution is injected to a spinning solution main tank. In a front-end block, after providing applied voltage of 15kV, electrospinning polyehtersulfone solution on a meta-aramid substrate with basis weight of 30gsm, and laminating formed polyehtersulfone nanofiber non-woven fabric with thickness of 2.5$\mu$m and fiber diameter of 350nm. In a rear-end block, after providing applied voltage of 20kV, electrospinning polyethersulfone solution on the polyethersulfone nanofiber non-woven fabric, laminating formed polyehtersulfone nanofiber non-woven fabric with thickness of 2.5$\mu$m and fiber diameter of 150nm, and produces a filter. In this case, electrospinning is performed in conditions of the distance between an electrode and a collector is 40cm, spinning solution flow rate is 0.1mL/h, temperature 22°C, and humidity 20%.

Example 53

Polyamic acid with weight average molecular weight of 100,000 is dissolved in dimethylacetamide(DMAc) and produces spinning solution, and the spinning solution electrospins on a meta-aramid substrate with basis weight of 30gsm in conditions of the distance between an electrode and a collector is 40cm, applied voltage is 20kV, spinning solution flow rate is 0.1mL/h, temperature 22°C, and humidity 20%, laminating formed polyamic acid nanofiber non-woven fabric with thickness of 5$\mu$m. Then in a laminating device, performing heat treatment in 150°C, imdization of polyamic acid, and produces a polyimide nanofiber filter.

Example 54

Except for performing heat treatment in a laminating device in 250°C instead of 150°C, example 54 performs the same process as example 53, and produces a nanofiber filter.

Example 55

Except for performing heat treatment in a laminating device in 350°C instead of 150°C, example 55 performs the same process as example 53, and produces a nanofiber filter.

Example 56

Polyamic acid of weight average molecular weight of 100,000 is dissolved in dimethyl acetamide(DMAc) and produces polyamic acid solution, and the polyamic acid solution is injected to a spinning solution main tank which provides spinning solution to each block of the electrospinning apparatus. In a front-end block located in front-end, applied voltage is provided 15kV, and electrospinning polyamic acid solution on a meta-aramid substrate with basis weight of 30gsm, and laminating formed polyamic acid nanofiber non-woven fabric having thickness of 2.5$\mu$m and fiber diameter of 350nm. In a rear-end block located in rear-end, applied voltage is provided 20kV, and polyamic acid solution electrospins on the polyamic acid nanofiber non-woven fabric, and laminating formed polyamic acid nanofiber non-woven fabric with thickness of 2.5$\mu$m and fiber diameter of 150nm, and produces a filter. In this case, electrospinning is performed in conditions of the distance between an electrode and a collector is 40cm, spinning solution flow rate is 0.1mL/h, temperature 22°C, and humidity 20%. Then in a laminating device, performing heat treatment in 150°C, imdization of polyamic acid nanofiber non-woven fabric, and produces a polyimide nanofiber filter.

Comparative Example 18

By using a meta-aramid substrate, produces a filter medium.

Comparative Example 19

Except for using a polyethylene terephthalate(PET) substrate instead of a meta-aramid substrate, comparative example 19 performs the same process as example 51, and produces a nanofiber filter.

Evaluation Example 20: thermal shrinkable rate evaluation

A filter each produced in example 51 to 56 and comparative example 18 and 19 is cut in size of 5cm × 2.5cm, put them between two pieces of slide glass and tighten with a clip, and after leaving in 150°C for 30minutes, measures contraction rate, and the result is shown in the following table 18.

Evaluation Example 21: filtering efficiency measurement

A filter each produced in example 51 to 56 and comparative example 18 and 19 is evaluated in the same method as evaluation example 2, and the result is shown in the following table 18.

[Table 18]

| | Example 51 | Example 52 | Example 53~55 | Example 56 | Comparative Example 18 | Comparative Example 19 |
|---|---|---|---|---|---|---|
| Thermal shrinkable rate (%) | 2 | 2 | <3 | 3 | 6 | 15 |
| 0.35$\mu$m DOP Filtering efficiency (%) | 85 | 89 | >84 | 88 | 60 | 84 |

A nanofiber filter each produced in example 51 to 56 compared to a filter(comparative example 18) produced only using a meata-aramid substrate has excellent filtering efficiency. Also, a nanofiber filter each produced in example 51 to 56 and a nanofiber filter produced in comparative example 19 have polyethersulfone nanofiber non-woven fabric and are similar in filtering efficiency, but a nanofiber filter which used a meta-aramid substrate in example 51 to 56 has far better thermal shrinkable rate.

Example 57

Polyvinylidene fluoride with weight average molecular weight of 50,000 is dissolved in N-Dimethylacetamide(DMAc) and produces spinning solution, and the spinning solution electrospins on a cellulose substrate with basis weight of 30gsm in conditions of the distance between an electrode and a collector is 40cm, applied voltage is 20kV, spinning solution flow rate is 0.1mL/h, temperature 22°C, and humidity 20%, laminating formed polyvinylidene fluoride nanofiber non-woven fabric with thickness of 3$\mu$m. Then slurry produced by adding acetone in weight ratio of 9:1 in $Al_2O_3$ inorganic particle in size of 0.5$\mu$m and polymethyl metacrylate(PMMA)(LG IG840) which is binder, casting on nanofiber non-woven fabric in thickness of 2$\mu$m.

Example 58

Except for modifying weight ratio of 9:1 in $Al_2O_3$ inorganic particle in size of 0.5$\mu$m and polymethyl metacrylate(PMMA)(LG IG840) which is binder to 8:2 weight ratio, example 58 performs the same process as example 57, and produces a nanofiber filter.

Comparative Example 20

Nylon 6 is dissolved in formic acid and produces nylon 6 solution, and the nylon 6 solution is injected to a spinning solution main tank. By electrospinning in thickness of 5$\mu$m in conditions of applied voltage 20kV, spinning solution flow rate 0.1mL/h, temperature 22°C, humidity 20%, on a cellulose substrate with basis weight of 30gsm on a collector, and produces a nylon 6 nanofiber filter.

Comparative Example 21

By only using polyethylene terephthalate, a filter medium is produced.

Evaluation Example 22: thermal shrinkable rate evaluation

A filter each produced in example 57 and 58 and comparative example 20 is cut in size of 5cm × 2.5cm, put them between two pieces of slide glass and tighten with a clip, and after leaving in 150°C for 30minutes, measures contraction rate, and the result is shown in the following table 19.

Evaluation Example 23: filtering efficiency measurement Filtering efficiency of a filter each produced in example 57 and 58 and comparative example 21 is evaluated in the same method as evaluation example 2, and the result is shown in the following table 20.

[Table 19]

| | Example 57 | Example 58 | Comparative Example 20 |
|---|---|---|---|
| Thermal shrinkable rate (%) | 3 | 4 | 10 |

[Table 20]

| | Example 57 | Example 58 | Comparative Example 21 |
|---|---|---|---|
| 0.35$\mu$m DOP Filtering efficiency (%) | 90 | 89 | 50 |

According to the table 19 and table 20, a nanofiber filter each produced in example 57 and 58 compared to a filter produced in comparative example 20 has lower thermal shrinkable rate and excellent heat-resistant stability, and compared to a filter produced in comparative example 21 has far better filtering efficiency.

## Claims

1. A multi-layered nanofiber filter for improved heat-resisting property, comprising:

   a substrate; a first heat-resistant polymer nanofiber non-woven fabric laminating formed on the substrate by electrospinning; and a second heat-resistant polymer nanofiber non-woven fabric laminating formed on the first heat-resistant polymer nanofiber non-woven fabric.

2. The multi-layered nanofiber filter for improved heat-resisting property of claim 1, wherein the first heat-resistant polymer nanofiber non-woven fabric has fiber diameter of 250 to 500nm, and the second heat-resistant polymer nanofiber non-woven fabric has fiber diameter of 50 to 250nm.

3. The multi-layered nanofiber filter for improved heat-resisting property of claim 1, wherein the first heat-resistant polymer nanofiber non-woven fabric is inorganic polymer nanofiber non-woven fabric with thick fiber thickness, and the second heat-resistant polymer nanofiber non-woven fabric is inorganic polymer nanofiber non-woven fabric with thin fiber thickness

4. The multi-layered nanofiber filter for improved heat-resisting property of claim 1, further comprising, a third heat-resistant polymer nanofiber non-woven fabric laminating formed on the second heat-resistant polymer nanofiber non-woven fabric by electrospinning.

5. The multi-layered nanofiber filter for improved heat-resisting property of claim 4, wherein the third heat-resistant polymer nanofiber non-woven fabric is polyamic acid nanofiber non-woven fabric, and the third polymer nanofiber non-woven fabric is processed in heat-treatment in 150 to 350°C.

6. The multi-layered nanofiber filter for improved heat-resisting property of claim 1, further comprising a substrate laminating formed on the second heat-resistant polymer nanofiber non-woven fabric by electrospinning.

7. The multi-layered nanofiber filter for improved heat-resisting property of claim 6, the substrate laminating formed on the second heat-resistant polymer nanofiber non-woven fabric by electrospinning is a cellulose substrate or a meta-aramid substrate.

**8.** The multi-layered nanofiber filter for improved heat-resisting property of any one claim among claim 1 to 3, wherein the substrate is one kind selected among a group comprising a cellulose substrate, a meta-aramid substrate, and a bicomponent substrate.

**9.** The multi-layered nanofiber filter for improved heat-resisting property of claim 1 or claim 2, wherein the first heat-resistant polymer nanofiber non-woven fabric and the second heat-resistant polymer nanofiber non-woven fabric are the same or different, and each independently comprising one kind of polymer selected from polyamic acid, polyacrylonitrile, polyethersulfone, polyamide, meta-aramid, polyvinylidene fluoride, silane or siloxane alone polymer, and silane or siloxane copolymer.

**10.** The multi-layered nanofiber filter for improved heat-resisting property of claim 9, wherein the polyamide is one kind selected from a group comprising nylon 6, nylon 46, and nylon 66.

**11.** The multi-layered nanofiber filter for improved heat-resisting property of claim 9, wherein when the first heat-resistant polymer nanofiber non-woven fabric or the second heat-resistant polymer nanofiber non-woven fabric comprises with polyamic acid, the first polymer nanofiber non-woven fabric or the second polymer nanofiber non-woven fabric is processed heat-treatment in temperature of 150 to 350°C.

**12.** The multi-layered nanofiber filter for improved heat-resisting property of claim 3, wherein the inorganic polymer nanofiber non-woven fabric comprising silane or polymer alone comprising siloxane, or siloxane or copolymer comprising coupler of siloxane and one selected from monomethacrulate, vinyl, hydride, distearate, bis(12-hydroxystearate), methoxy, ethoxylated, propoxylated, diglycidyl ether, mono glycidyl ether, mono hydroxy, bis(hydroxyalkyl), chlorine, bis(3-aminopropyl), and bis((amino ethyl-amino propyl)dimethoxy silyl)ether.

**13.** Manufacturing method of a multi-layered nanofiber filter for improved heat-resisting property, comprising:

a step of providing a first spinning solution which dissolved a first heat-resistant polymer in organic solvent to a nozzle connected to a front-end block, and providing a second spinning solution which dissolved a second heat-resistant polymer in organic solvent to a nozzle connected to a rear-end block;
a step of electrospinning a first spinning solution on a cellulose substrate in a nozzle connected to the front-end block and laminating formed a first polymer nanofiber non-woven fabric; and
a step of consecutively electrospinning a second spinning solution on the first polymer nanofiber non-woven fabric in a nozzle connected to the rear-end block and laminating formed a second polymer nanofiber non-woven fabric.

**14.** Manufacturing method of a multi-layered nanofiber filter for improved heat-resisting property of claim 13, wherein the first polymer nanofiber non-woven fabric has fiber diameter of 250 to 500nm, and the second polymer nanofiber non-woven fabric has fiber diameter of 50 to 250nm.

**15.** Manufacturing method of a multi-layered nanofiber filter for improved heat-resisting property of claim 13, wherein the first heat-resistant polymer nanofiber non-woven fabric is inorganic polymer nanofiber non-woven fabric with thick fiber thickness, and the second heat-resistant polymer nanofiber non-woven fabric is inorganic polymer nanofiber non-woven fabric with thin fiber thickness.

**16.** Manufacturing method of a multi-layered nanofiber filter for improved heat-resisting property of claim 13, further comprising, a step of covering a substrate on the second polymer nanofiber non-woven fabric.

**17.** Manufacturing method of a multi-layered nanofiber filter for improved heat-resisting property of claim 16, wherein a step of covering a substrate on the second polymer nanofiber non-woven fabric, the substrate is a cellulose substrate or a meta-aramid substrate.

**18.** Manufacturing method of a multi-layered nanofiber filter for improved heat-resisting property of any one claim among claim 13 to claim 15, wherein the substrate is one kind selected from a group comprising a cellulose substrate, a meta-aramid substrate, and a bicomponent substrate.

**19.** Manufacturing method of a multi-layered nanofiber filter for improved heat-resisting property of claim 13 or claim 14, the first heat-resistant polymer and the second heat-resistant polymer are the same or different, and each independently comprising one kind selected from a group comprising polyamic acid, polyacrylonitrile, polyethersulfone, polyamide, meta-aramid, polyvinylidene fluoride, silane or siloxane alone polymer, and silane or siloxane copolymer.

**20.** Manufacturing method of a multi-layered nanofiber filter for improved heat-resisting property of claim 19, wherein the polyamide is one kind selected from a group comprising nylon 6, nylon 46, and nylon 66.

**21.** Manufacturing method of a multi-layered nanofiber filter for improved heat-resisting property of claim 19, wherein when the first heat-resistant polymer or the second heat-resistant polymer is polyamic acid, further comprising, a step of heat-treatment of the first polymer nanofiber non-woven fabric or the second polymer nanofiber non-woven fabric and performs imidization.

**22.** Manufacturing method of a multi-layered nanofiber filter for improved heat-resisting property of claim 21, wherein in the imdization step, performing heat treatment in temperature of 150 to 350°C.

**23.** Manufacturing method of a multi-layered nanofiber filter for improved heat-resisting property of claim 15, wherein the inorganic polymer nanofiber non-woven fabric comprising silane or polymer alone comprising siloxane, or copolymer polymer comprising coupler of silane or siloxane and one selected from monomethacrulate, vinyl, hydride, distearate, bis(12-hydroxy-stearate), methoxy, ethoxylated, propoxylated, diglycidyl ether, mono glycidyl ether, mono hydroxy, bis(hydroxyalkyl), chlorine, bis(3-aminopropyl), and bis((amino ethyl-amino propyl)dimethoxy silyl)ether.

**24.** Manufacturing method of a multi-layered nanofiber filter for improved heat-resisting property of any one claim among claim 13 to claim 15, wherein by differing intensity of voltage provided to each of the block, or by adjusting spinning solution concentration, or by adjusting the distance between a nozzle and a collector, or by adjusting feed speed of an elongated sheet, laminating formed heat-resistant polymer nanofiber non-woven fabric with different fiber thickness.

**25.** Manufacturing method of a multi-layered nanofiber filter for improved heat-resisting property of claim 13, wherein the electrospinning is a bottom-up electrospinning.

**26.** Manufacturing method of a multi-layered nanofiber filter for improved heat-resisting property, comprising:

a step of dissolving polyacrylonitrile in organic solvent and providing polyacrylonitirle solution to a front-end block of nozzle, dissolving meta-aramid in organic solvent and providing meta-aramid solution to a middle bock of nozzle, and dissolving polyamic acid in organic solution and providing polyamic acid solution to a rear-end block of nozzle;
a step of electrospinning polyacrylonitrile solution on a cellulose substrate from the front-end block of nozzle and laminating formed polyacrylonitrile nanofiber non-woven fabric;
a step of electrospinning meta-aramid solution on the polyacrylonitirle nanofiber non-woven fabric from the middle block of nozzle and laminating formed meta-aramid nanofiber non-woven fabric;
a step of consecutively electrospinning polyamic acid solution on the meta-aramid nanofiber non-woven fabric from the rear-end block of nozzle and laminating formed polyamic acid nanofiber non-woven fabric; and
a step of heat-treatment of the laminated polyamic acid nanofiber non-woven fabric and imidization of polyamic acid nanofiber non-woven fabric.

**27.** Manufacturing method of a multi-layered nanofiber filter for improved heat-resisting property of claim 26, wherein in the imdization step, performing heat treatment in temperature of 150 to 350°C.

**28.** Manufacturing method of a multi-layered nanofiber filter for improved heat-resisting property of claim 26, wherein the electrospinning is a bottom-up electrospinning.

**29.** A multi-layered nanofiber filter for improved heat-resisting property, comprising:

a substrate; and
heat-resistant polymer nanofiber non-woven fabric laminating formed on the substrate by electrospinning.

**30.** The multi-layered nanofiber filter for improved heat-resisting property of claim 29, the heat-resistant polymer nanofiber non-woven fabric comprises thick heat-resistant polymer nanofiber layer and thin heat-resistant polymer nanofiber layer.

**31.** The multi-layered nanofiber filter for improved heat-resisting property of claim 29, wherein the substrate is cellulose or meta-aramid.

**32.** The multi-layered nanofiber filter for improved heat-resisting property of claim 29, wherein the heat-resistant polymer nanofiber non-woven fabric comprises one kind of polymer selected from a group comprising polyvinylidene fluoride, polyethersulfone, and polyamic acid.

**33.** The multi-layered nanofiber filter for improved heat-resisting property of claim 32, the heat-resistant polymer nanofiber non-woven fabric comprises with polyamic acid, and heat treatment of the heat-resistant polymer nanofiber non-woven fabric.

**34.** The multi-layered nanofiber filter for improved heat-resisting property of claim 29, further comprising, ceramic coating film formed on one side of the heat-resistant polymer nanofiber non-woven fabric.

**35.** Manufacturing method of a multi-layered nanofiber filter for improved heat-resisting property of claim 34, wherein the ceramic coating film comprises any one selected from a group of $SiO_2$ $Al_2O_3$, $TiO_2$, $Li_3PO_4$, zeolite, MgO, CaO, $BaTiO_3$, $Li_2O$, LiF, LiOH, $Li_3N$, BaO, $Na_2O$, $Li_2CO_3$, $CaCO_3$, $LiAlO_2$, SiO, SnO, $SnO_2$, $PbO_2$, ZnO, $P_2O_5$, CuO, MoO, $V_2O_5$, $B_2O_3$, $Si_3N_4$, $CeO_2$ $Mn_3O_4$, $Sn_2P_2O_7$, $Sn_2B_2O_5$, $Sn_2BPO_6$, and their mixture.

**36.** Manufacturing method of a multi-layered nanofiber filter for improved heat-resisting property, comprising: a step of dissolving a heat-resistant polymer in organic solvent and producing a spinning solution; and a step of electrospinning the spinning solution on a substrate and laminating formed heat-resistant polymer nanofiber non-woven fabric.

**37.** Manufacturing method of a multi-layered nanofiber filter for improved heat-resisting property of claim 36, further comprising, a step of electrospinning the spinning solution on a substrate and laminating formed heat-resistant polymer nanofiber non-woven fabric, and a step of in a front-end block of the electrospinning apparatus, heat-resistant polymer nanofiber non-woven fabric with thick fiber thickness electrospun and laminating formed on the substrate, and in a rear-end block, heat-resistant polymer nanofiber non-woven fabric with thin fiber thickness electrospun and laminating formed on the heat-resistant polymer nanofiber with thick fiber thickness.

**38.** Manufacturing method of a multi-layered nanofiber filter for improved heat-resisting property of claim 36, the substrate is cellulose or meta-aramid.

**39.** Manufacturing method of a multi-layered nanofiber filter for improved heat-resisting property of claim 36, wherein the heat-resistant polymer is one kind selected from a group comprising polyvinylidene fluoride, polyethersulfone, and polyamic acid.

**40.** Manufacturing method of a multi-layered nanofiber filter for improved heat-resisting property of claim 39, wherein the heat-resistant polymer is polyamic acid, further comprising, a step of heat treatment of the heat-resistant polymer nanofiber non-woven fabric and imdization.

**41.** Manufacturing method of a multi-layered nanofiber filter for improved heat-resisting property of claim 40, wherein in the imdization step, performing heat treatment in temperature of 150 to 350°C.

**42.** Manufacturing method of a multi-layered nanofiber filter for improved heat-resisting property of claim 36, comprising:

a step of forming ceramic coating film on the heat-resistant polymer nanofiber non-woven fabric.

**43.** Manufacturing method of a multi-layered nanofiber filter for improved heat-resisting property of claim 42, wherein the ceramic coating film comprises any one selected from a group of $SiO_2$, $Al_2O_3$, $TiO_2$, $Li_3PO_4$, zeolite, MgO, CaO, $BaTiO_3$, $Li_2O$, LiF, LiOH, $Li_3N$, BaO, $Na_2O$, $Li_2CO_3$, $CaCO_3$, $LiAlO_2$, SiO, SnO, $SnO_2$, $PbO_2$, ZnO, $P_2O_5$, CuO, MoO, $V_2O_5$, $B_2O_3$, $Si_3N_4$, $CeO_2$, $Mn_3O_4$, $Sn_2P_2O_7$, $Sn_2B_2O_5$, $Sn_2BPO_6$, and their mixture.

**44.** Manufacturing method of a multi-layered nanofiber filter for improved heat-resisting property of claim 36, wherein in a step of electrospinning the spinning solution on a substrate and laminating formed heat-resistant polymer nanofiber non-woven fabric, using the electrospinning in a bottom-up electrospinning method.

FIG.1

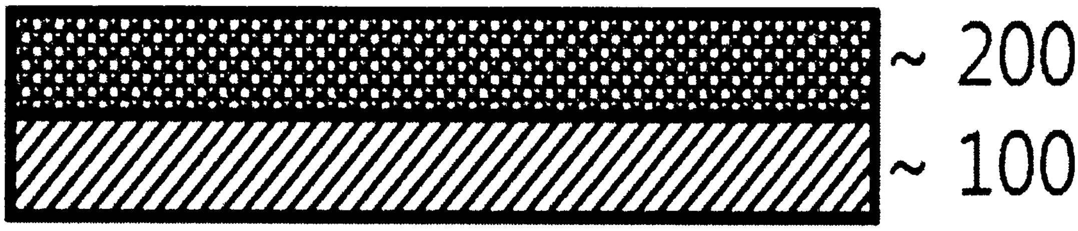


FIG.2

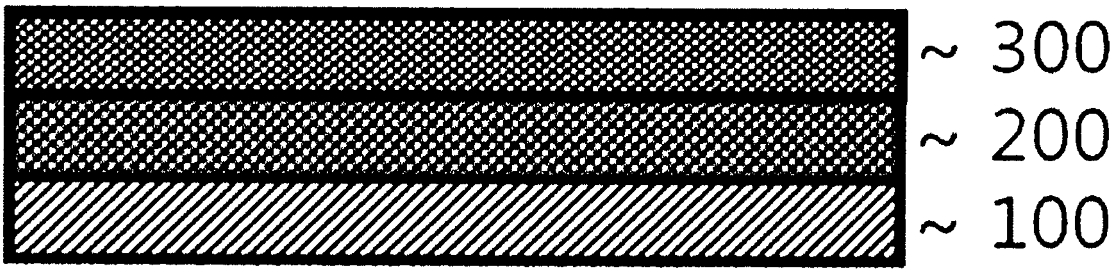

FIG.3

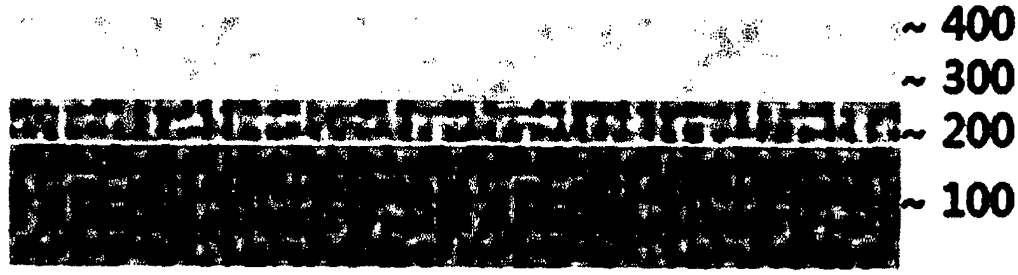


FIG.4

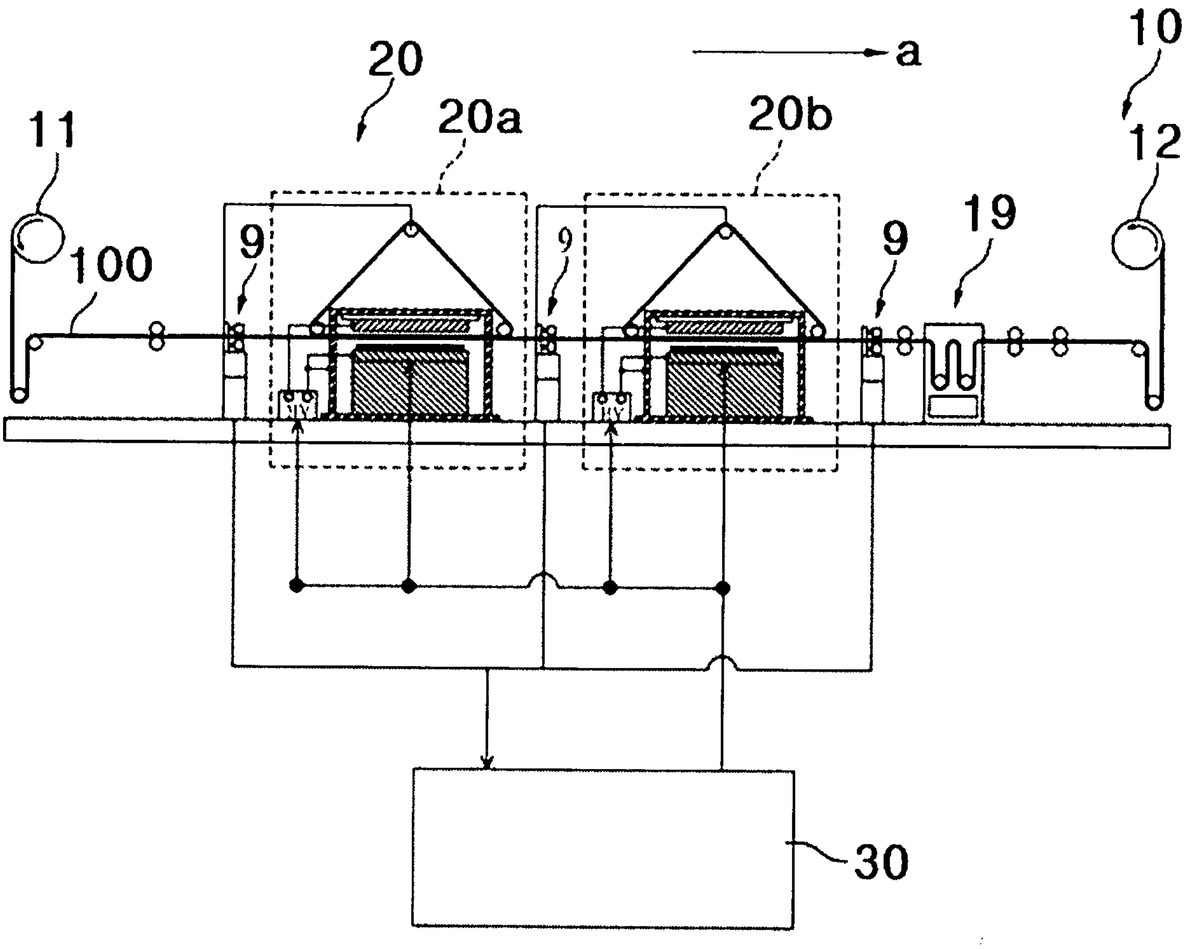

FIG.5

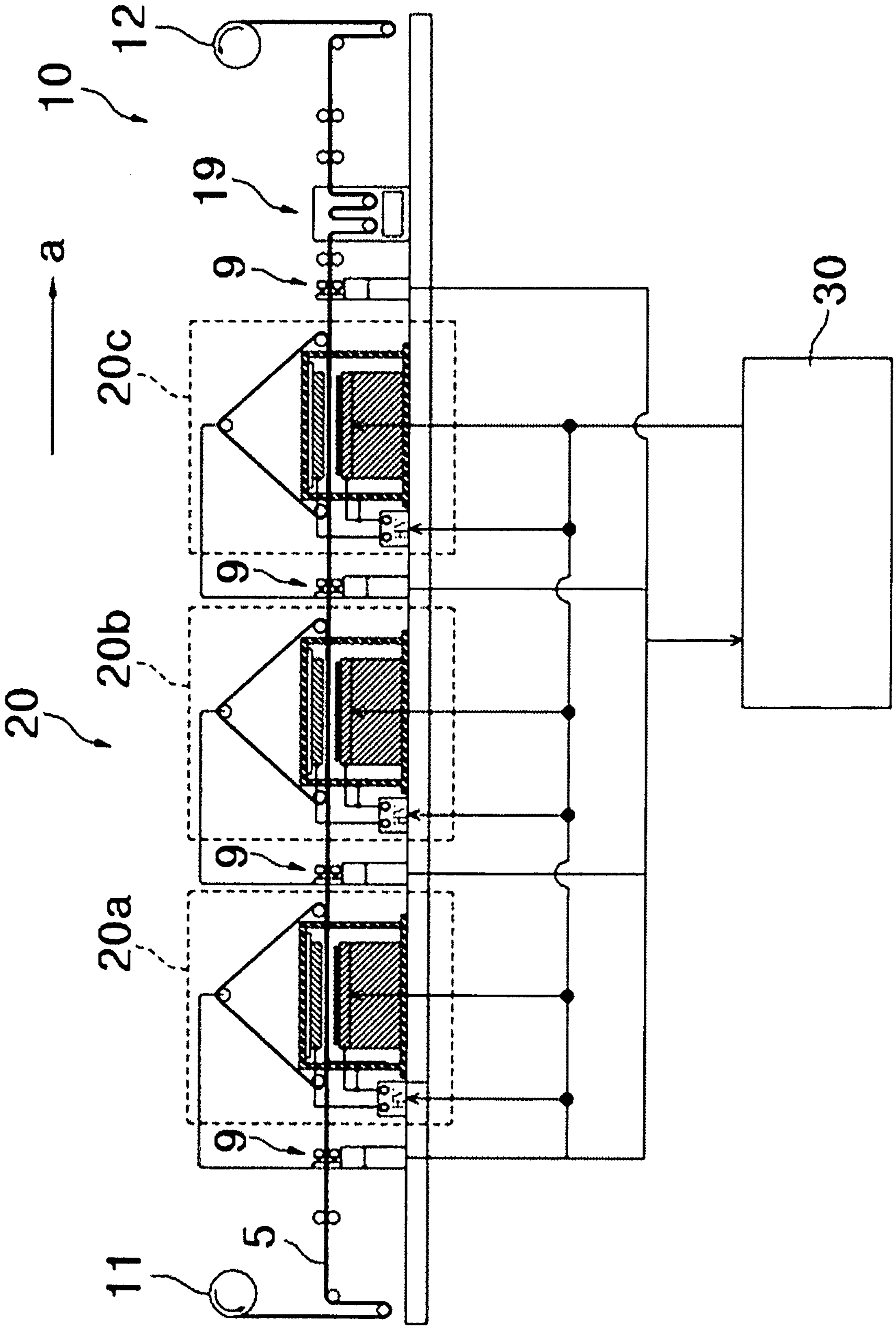

FIG.6

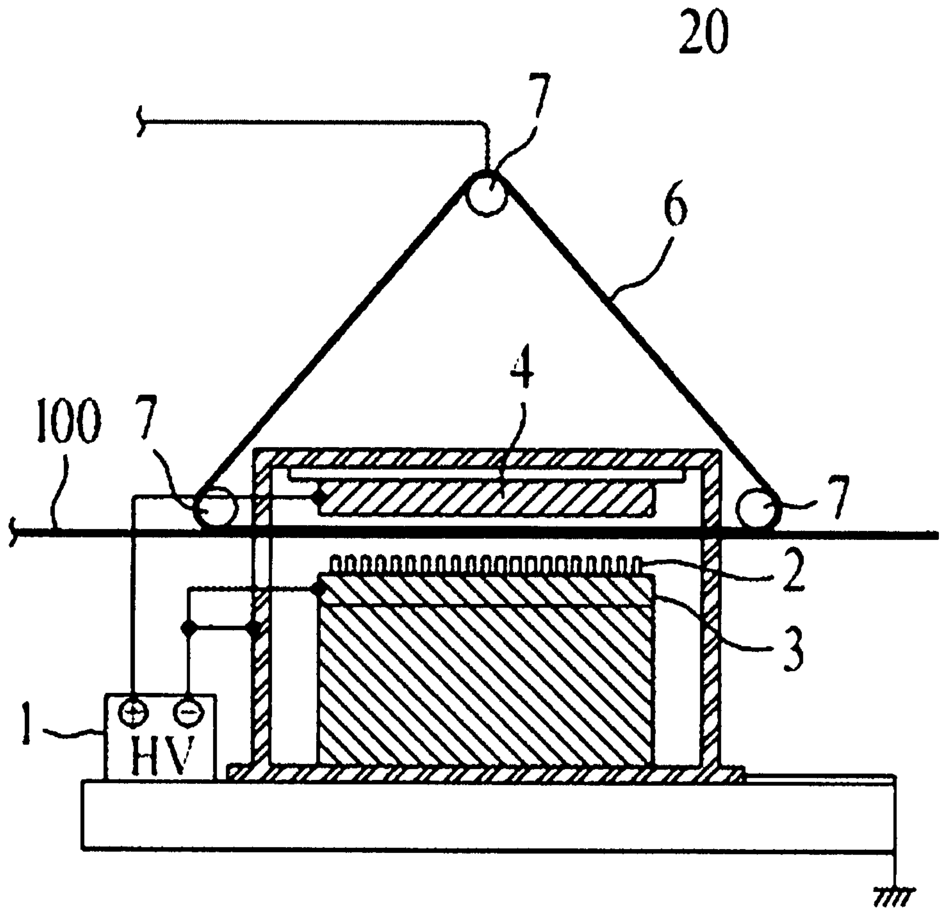


FIG.7

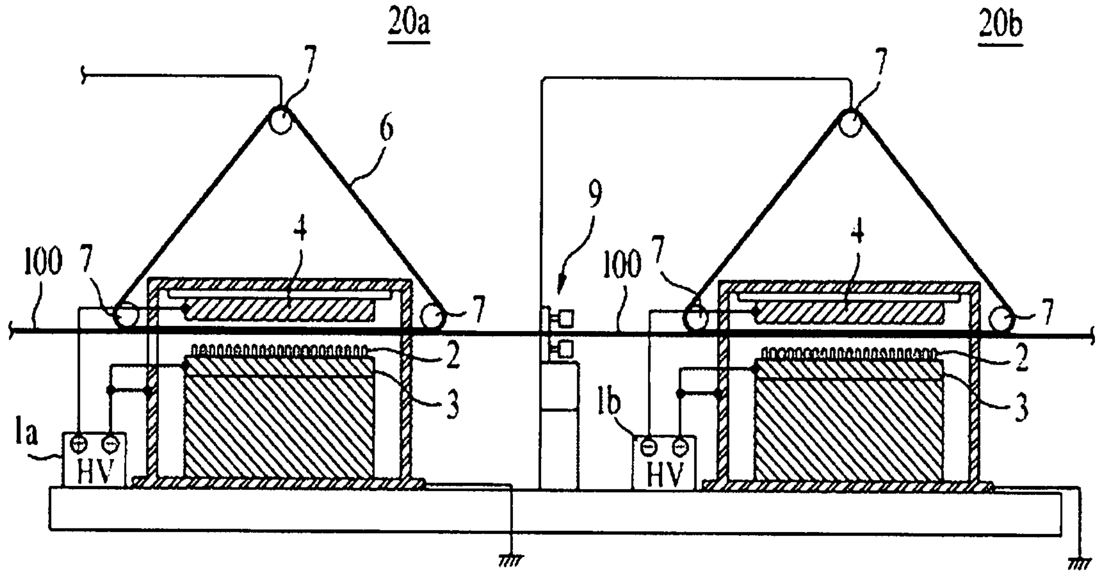

FIG.8

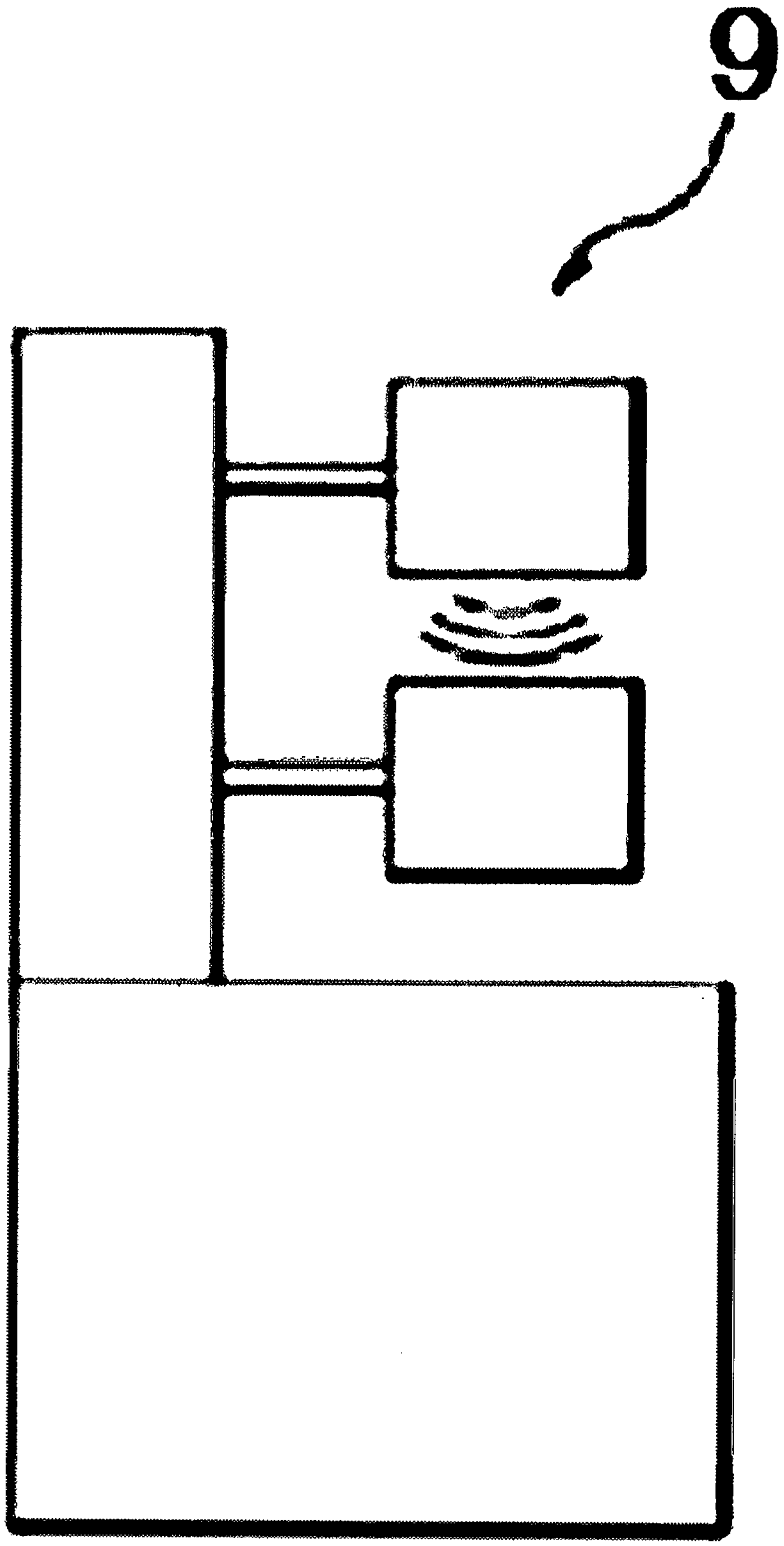

FIG.9

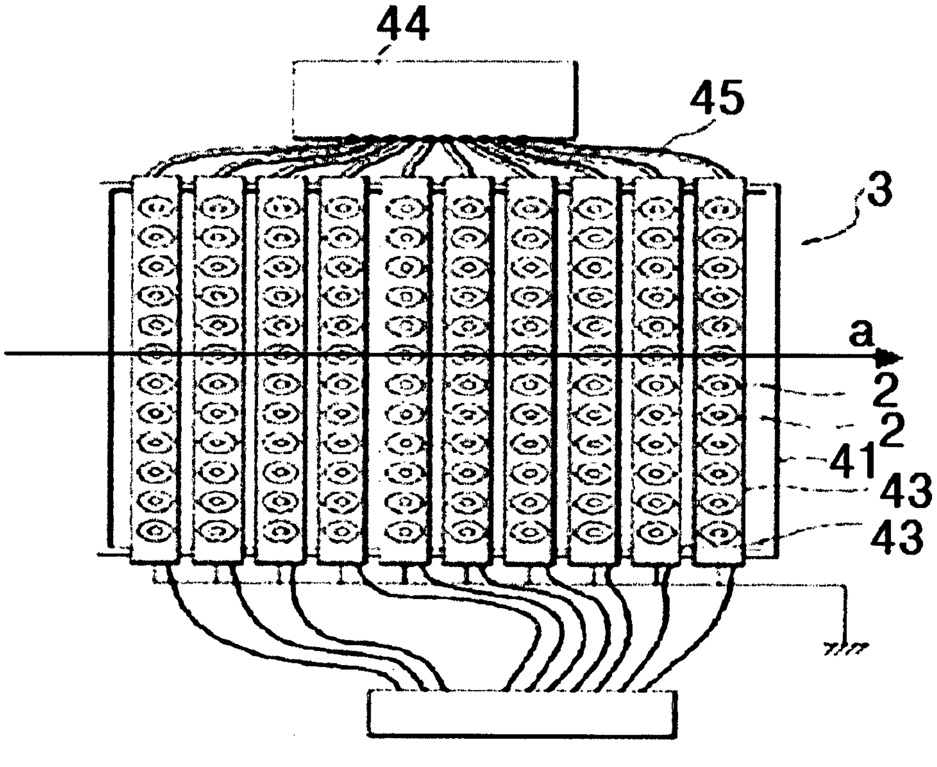

# INTERNATIONAL SEARCH REPORT

International application No.
**PCT/KR2014/001569**

A. CLASSIFICATION OF SUBJECT MATTER

***D04H 1/728(2012.01)i, D04H 1/4382(2012.01)i, D04H 1/4374(2012.01)i, B01D 39/02(2006.01)i***

According to International Patent Classification (IPC) or to both national classification and IPC

B. FIELDS SEARCHED

Minimum documentation searched (classification system followed by classification symbols)

D04H 1/728; D04H 1/425; B01D 53/22; D04H 13/00; D06M 15/00; D06M 15/59; B01D 69/12; B01D 39/16; D04H 1/4209; B01D 46/00; D04H 1/4382; D04H 1/4374; B01D 39/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: electro-spinning, heat-resisting, nano fiber filter, lamination, poly amic acid, imidization, diameter

C. DOCUMENTS CONSIDERED TO BE RELEVANT

| Category* | Citation of document, with indication, where appropriate, of the relevant passages | Relevant to claim No. |
|---|---|---|
| X<br>Y<br><br><br>A | US 2005-0235619 A1 (HEINZ, B. et al.) 27 October 2005<br>See abstract, paragraphs [0010], [0034], [0036], [0046] and claims 1-2. | 29,31-32,34-36<br>,38-39,42-44<br>1-2,4-11,13-14<br>,16-22,24-25,30,33<br>,37,40-41<br>3,12,15,23,26-28 |
| Y | KR 10-0714219 B1 (LEE, Bong Dae) 02 May 2007<br>See abstract, figure 1, paragraphs [0048], [0050] and claims 1-2. | 1-2,4-11,13-14<br>,16-22,24-25,30,37 |
| Y | KR 10-2011-0072006 A (KOLON FASHION MATERIAL. INC.) 29 June 2011<br>See abstract, paragraphs [0007], [0041]-[0042] and claim 1. | 5,11,21-22,33<br>,40-41 |
| A | KR 10-2007-0073850 A (KIMBERLY-CLARK WORLDWIDE, INC.) 10 July 2007<br>See abstract, pages 9, 11, claims 1, 6, 27-28 and figures 1A-1B. | 1-44 |
| A | KR 10-2012-0126912 A (LEE, Soo-Bok) 21 November 2012<br>See abstract and claims 1-3. | 1-44 |
| A | US 2009-0199717 A1 (GREEN, T. B. et al.) 13 August 2009<br>See abstract and claim 1. | 1-44 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 JUNE 2014 (12.06.2014) | **13 JUNE 2014 (13.06.2014)** |

| Name and mailing address of the ISA/**KR** | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.
**PCT/KR2014/001569**

| Patent document cited in search report | Publication date | Patent family member | Publication date |
|---|---|---|---|
| US 2005-0235619 A1 | 27/10/2005 | AT 390197 T | 15/04/2008 |
| | | AU 2003-273167 A1 | 12/12/2003 |
| | | BR 0305023 A | 25/01/2005 |
| | | CA 2487164 A1 | 04/12/2003 |
| | | DE 50211962 D1 | 08/05/2008 |
| | | EP 1366791 A1 | 03/12/2003 |
| | | EP 1366791 B1 | 26/03/2008 |
| | | JP 2005-527358 A | 15/09/2005 |
| | | KR 10-2005-0024298 A | 10/03/2005 |
| | | WO 03-099415 A1 | 04/12/2003 |
| KR 10-0714219 B1 | 02/05/2007 | JP 2008-095266 A | 24/04/2008 |
| | | US 2008-0217807 A1 | 11/09/2008 |
| KR 10-2011-0072006 A | 29/06/2011 | KR 10-1096952 B1 | 20/12/2011 |
| KR 10-2007-0073850 A | 10/07/2007 | EP 1819859 A1 | 22/08/2007 |
| | | US 2006-0094320 A1 | 04/05/2006 |
| | | WO 2006-049663 A1 | 11/05/2006 |
| KR 10-2012-0126912 A | 21/11/2012 | NONE | |
| US 2009-0199717 A1 | 13/08/2009 | AU 2008-326615 A1 | 28/05/2009 |
| | | AU 2008-326615 B2 | 26/09/2013 |
| | | CA 2705557 A1 | 28/05/2009 |
| | | CN 101868290 A | 20/10/2010 |
| | | EP 2222385 A2 | 01/09/2010 |
| | | JP 2011-504138 A | 03/02/2011 |
| | | KR 10-2010-0103529 A | 27/09/2010 |
| | | MX 2010005473 A | 11/08/2010 |
| | | US 2013-313736 A1 | 28/11/2013 |
| | | WO 2009-067365 A2 | 28/05/2009 |
| | | WO 2009-067365 A3 | 22/10/2009 |

Form PCT/ISA/210 (patent family annex) (July 2009)